# EUROPEAN PATENT APPLICATION

(11) **EP 4 804 659 A1**
(43) Date of publication of application: **09.09.2026**
(21) Application number: 23957181.3
(22) Date of filing: 31.10.2023
(51) Int. Cl.: H04W 64/00

(54) **SIGNAL TRANSMISSION METHODS AND APPARATUSES, AND DEVICES AND MEDIUM**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN); ZHANG, Junyu, Dongguan, Guangdong 523860 (CN)
(74) Representative: Mewburn Ellis LLP
(86) International application number: PCT/CN2023/128879
(87) International publication number: WO 2025/091304

(57) **Abstract**

A signal transmission method, apparatus, device, and medium are provided and relate to the field of communication. The method is performed by a first device. The method includes the following. Transmit a first signal, the first signal includes at least two signals, and a phase difference of the at least two signals is used for positioning and/or ranging. The technical solution supports positioning and/or ranging through phase difference, offering high positioning accuracy and/or measurement accuracy, and is simple to implement.

## Description

### TECHNICAL FIELD

This disclosure relates to the field of communication, and particularly relates to a method for signal transmission, an apparatus for signal transmission, a device, and a medium.

### BACKGROUND

In the related art, when using signals for positioning or ranging, certain requirements are placed on the capabilities of the signal sender. If the capabilities of the signal sender are weak, such as supporting a narrow bandwidth, poor stability, and low accuracy, it becomes difficult to achieve high-precision positioning or ranging through such signals.

### SUMMARY

The disclosure provides a signal transmission method, apparatus, device, and medium. The technical solution includes at least the following.

According to one aspect of the embodiments of the disclosure, a signal transmission method is provided. The method is performed by a first device, and the method includes: sending a first signal, where the first signal includes at least two signals, and a phase difference between the at least two signals is used for positioning and/or ranging.

According to another aspect of the embodiments of the disclosure, a signal transmission method is provided. The method is performed by a second device, and the method includes: receiving a first signal, where the first signal includes at least two signals, and a phase difference between the at least two signals is used for positioning and/or ranging.

According to one aspect of the embodiments of the disclosure, a signal transmission apparatus is provided. The apparatus includes: a transmitting module, configured to transmit a first signal, where the first signal includes at least two signals, and a phase difference between the at least two signals is used for positioning and/or ranging.

According to another aspect of the embodiments of the disclosure, a signal transmission apparatus is provided. The apparatus includes: a receiving module, configured to receive a first signal, where the first signal includes at least two signals, and a phase difference between the at least two signals is used for positioning and/or ranging.

According to one aspect of the embodiments of the disclosure, a communication device is provided. The communication device includes: a processor; a receiver and/or a transmitter connected to the processor; a memory for storing executable instructions of the processor; where the communication device is configured to implement the signal transmission method as described above.

According to another aspect of the embodiments of the disclosure, a communication device is provided. The communication device includes: a receiver and/or a transmitter; wherein the communication device is configured to implement the signal transmission method as described above.

According to one aspect of the disclosure, a computer-readable storage medium is provided. The computer-readable storage medium stores executable instructions, and the executable instructions are loaded and executed by a processor to implement the signal transmission method according to the above aspects.

According to one aspect of the disclosure, a computer program product is provided. The computer program product includes computer instructions stored in a computer-readable storage medium. A processor of a computer device reads the computer instructions from the computer-readable storage medium, and the processor executes the computer instructions, causing the computer device to perform the signal transmission method according to the above aspects.

According to one aspect of the disclosure, a chip is provided. The chip includes a programmable logic circuit and/or program instructions, and when the chip operates, it implements the signal transmission method according to the above aspects.

According to one aspect of the disclosure, a computer program is provided. The computer program includes computer instructions, and a processor of a computer device executes the computer instructions, causing the computer device to perform the signal transmission method according to the above aspects.

The technical solutions provided by the embodiments of the disclosure may include the following beneficial effects: support for positioning and/or ranging through phase difference, offering high positioning accuracy and/or measurement accuracy, with simple implementation. Due to the simple calculation principle of phase difference, the solution for positioning and/or ranging using phase difference is highly robust and minimally affected by signal transmission quality and signal structure. Even if the first device has limited capabilities, such as supporting only narrow bandwidth, poor stability and accuracy, and difficulty in transmitting high-precision, high-stability, or structurally complex signals, high-precision positioning and/or ranging can still be achieved.

### BRIEF DESCRIPTION OF THE DRAWINGS

In order to more clearly illustrate the technical solutions in the embodiments of the disclosure, the following will briefly introduce the drawings required in the description of the embodiments. Obviously, the drawings in the following description are only some embodiments of the disclosure. For those of ordinary skill in the art, other drawings can be obtained based on these drawings without any creative effort.
FIG. 1 illustrates a schematic diagram of a wireless communication system provided by an exemplary embodiment of the disclosure.
FIG. 2 illustrates a schematic diagram of a communication system provided by an exemplary embodiment of the disclosure.
FIG. 3 illustrates a schematic diagram of radio frequency energy harvesting provided by an exemplary embodiment of the disclosure.
FIG. 4 illustrates a schematic diagram of a backscatter communication process (also known as back scattering) provided by an exemplary embodiment of the disclosure.
FIG. 5 illustrates a schematic diagram of resistive load modulation provided by an exemplary embodiment of the disclosure.
FIG. 6 illustrates a schematic diagram of an encoding method provided by an exemplary embodiment of the disclosure.
FIG. 7 illustrates a schematic flowchart of a signal transmission method provided by an exemplary embodiment of the disclosure.
FIG. 8 illustrates a schematic flowchart of a signal transmission method provided by an exemplary embodiment of the disclosure.
FIG. 9 illustrates a schematic diagram of a first signal provided by an exemplary embodiment of the disclosure.
FIG. 10 illustrates a schematic diagram of a first signal provided by an exemplary embodiment of the disclosure.
FIG. 11 illustrates a schematic diagram of a second signal and a third signal provided by an exemplary embodiment of the disclosure.
FIG. 12 illustrates a schematic diagram of signals on a set of frequency components provided by an exemplary embodiment of the disclosure.
FIG. 13 illustrates a schematic diagram of signals on a set of frequency components provided by an exemplary embodiment of the disclosure.
FIG. 14 illustrates a schematic diagram of signals on a set of frequency components provided by an exemplary embodiment of the disclosure.
FIG. 15 illustrates a schematic diagram of signals on multiple sets of frequency components provided by an exemplary embodiment of the disclosure.
FIG. 16 illustrates a schematic flowchart of a signal transmission method provided by an exemplary embodiment of the disclosure.
FIG. 17 illustrates a schematic flowchart of a signal transmission method provided by an exemplary embodiment of the disclosure.
FIG. 18 illustrates a schematic diagram of a signal transmission method provided by an exemplary embodiment of the disclosure.
FIG. 19 illustrates a schematic diagram of a signal transmission method provided by an exemplary embodiment of the disclosure.
FIG. 20 illustrates a schematic diagram of a signal transmission method provided by an exemplary embodiment of the disclosure.
FIG. 21 illustrates a structural block diagram of a signal transmission apparatus provided by an exemplary embodiment of the disclosure.
FIG. 22 illustrates a structural block diagram of a signal transmission apparatus provided by an exemplary embodiment of the disclosure.
FIG. 23 illustrates a structural schematic diagram of a communication device provided by an exemplary embodiment of the disclosure.
FIG. 24 illustrates a structural schematic diagram of a communication device provided by an exemplary embodiment of the disclosure.

### DETAILED DESCRIPTION

In order to make the objectives, technical solutions, and advantages of the disclosure clearer, the following will further describe the embodiments of the disclosure in detail with reference to the accompanying drawings. Exemplary embodiments will be described in detail here, with examples illustrated in the accompanying drawings. When the following description refers to the accompanying drawings, unless otherwise indicated, the same numerals in different drawings represent the same or similar elements. The embodiments described in the following exemplary embodiments do not represent all embodiments consistent with the disclosure. Instead, they are merely examples of devices and methods consistent with some aspects of the disclosure as detailed in the appended claims.

The terms used in the disclosure are for the purpose of describing specific embodiments only and are not intended to limit the disclosure. The singular forms "a," "the," and "said" used in the disclosure and the appended claims are also intended to include plural forms unless the context clearly indicates otherwise. It should also be understood that the term "and/or" as used herein refers to and includes any or all possible combinations of one or more associated listed items.

It should be understood that although terms such as first, second, third, etc. may be used in the disclosure to describe various types of information, such information should not be limited to these terms. These terms are only used to distinguish information of the same type from one another. For example, without departing from the scope of the disclosure, first information may also be referred to as second information, and similarly, second information may also be referred to as first information. Depending on the context, the word "if" as used herein may be interpreted as "when," "while," or "in response to determining."

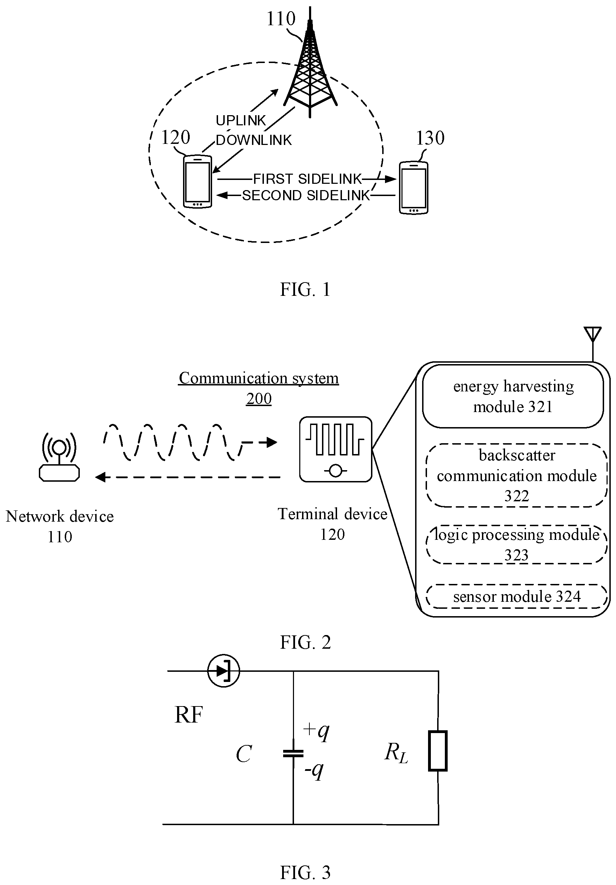

FIG. 1 illustrates a schematic diagram of a wireless communication system provided by an exemplary embodiment of the disclosure. The wireless communication system includes network device 110 and terminal device 120, and/or terminal device 120 and terminal device 130, which is not limited in the disclosure.

The network device 110 in the disclosure provides wireless communication functions, and includes but is not limited to: an evolved node b (eNB), a radio network controller (RNC), a node b (NB), a base station controller (BSC), a base transceiver station (BTS), a home base station (e.g., home evolved node B or home node B, HNB), a baseband unit (BBU), an access point (AP) in a wireless fidelity (Wi-Fi) system, a wireless relay node, a wireless backhaul node, a transmission point (TP), or a Transmission and reception point (TRP), etc. It may also be a next generation node B (gNB) or transmission point (TRP or TP) in a fifth generation (5G) mobile communication system, or one or a group (including multiple antenna panels) of antenna panels of a base station in a 5G system, or may also be network nodes constituting a gNB or transmission point, such as a BBU or a distributed unit (DU), etc., or a base station in a beyond fifth generation (B5G) mobile communication system, a sixth generation (6G) mobile communication system, etc., or a core network (CN), fronthaul, backhaul, radio access network (RAN), network slice, etc., or a reader in a radio frequency identification (RFID) system.

The terminal device 120 and/or terminal device 130 in the disclosure, also referred to as user equipment (UE), access terminal, subscriber unit, subscriber station, mobile station, mobile platform, remote station, remote terminal, mobile device, user terminal, terminal, wireless communication device, user agent, or user apparatus. The terminal includes but is not limited to: handheld devices, wearable devices, vehicle-mounted devices, and internet of things (IoT) devices, such as: electronic tags, controllers, mobile phones, tablet computers, e-readers, laptop portable computers, desktop computers, televisions, game consoles, mobile internet devices (MID), augmented reality (AR) terminals, virtual reality (VR) terminals, mixed reality (MR) terminals, wearable devices, handheld controllers, wireless terminals in industrial control, wireless terminals in self driving, wireless terminals in remote medical, wireless terminals in smart grid, wireless terminals in transportation safety, wireless terminals in smart city, wireless terminals in smart home, wireless terminals in remote medical surgery, cellular phones, cordless phones, session initiation protocol (SIP) phones, wireless local loop (WLL) stations, personal digital assistants (PDA), set-top boxes (STB), customer premise equipment (CPE), etc.

In some embodiments, network device 110 and terminal device 120 communicate with each other through a certain air interface technology, such as the Uu interface.

In some embodiments, there are two communication scenarios between network device 110 and terminal device 120: an uplink communication scenario and a downlink communication scenario. Here, uplink communication refers to sending signals to network device 110; downlink communication refers to sending signals to terminal device 120.

In some embodiments, terminal device 120 and terminal device 130 communicate with each other through a certain direct communication interface, such as the PC5 interface.

In some embodiments, there are two communication scenarios between terminal device 120 and terminal device 130: a first sidelink communication scenario and a second sidelink communication scenario. Here, first sidelink communication refers to sending signals to terminal device 130; second sidelink communication refers to sending signals to terminal device 120.

In some embodiments, both terminal device 120 and terminal device 130 are within network coverage and located in the same cell, or both terminal device 120 and terminal device 130 are within network coverage but located in different cells, or terminal device 120 is within network coverage but terminal device 130 is outside network coverage.

The technical solutions provided in the embodiments of the disclosure can be applied to various communication systems, such as: global system of mobile communication (GSM) system, code division multiple access (CDMA) system, wideband code division multiple access (WCDMA) system, general packet radio service (GPRS), long term evolution (LTE) system, LTE frequency division duplex (FDD) system, LTE time division duplex (TDD) system, advanced long term evolution (LTE-A) system, universal mobile telecommunication system (UMTS), worldwide interoperability for microwave access (WiMAX) communication system, 5G mobile communication system, new radio (NR) system, evolved systems of the NR system, LTE-based access to unlicensed spectrum (LTE-U) system, NR-based access to unlicensed spectrum (NR-U) system, terrestrial network (TN) system, non-terrestrial network (NTN) system, wireless local area networks (WLAN), wireless fidelity (Wi-Fi), cellular internet of things (IoT) systems, cellular passive IoT systems, ambient power enabled internet of things (Ambient IoT/A-IoT) system, zero-power IoT system, and may also be applicable to subsequent evolved systems of the 5G NR system, as well as B5G, 6G, and subsequent evolved systems. In some embodiments of the disclosure, "NR" may also be referred to as the 5G NR system or the 5G system. The 5G mobile communication system may include non-standalone (NSA) and/or standalone (SA) deployment.

The technical solutions provided in the embodiments of the disclosure can also be applied to machine type communication (MTC), long term evolution-machine (LTE-M), device-to-device (D2D) networks, machine-to-machine (M2M) networks, internet of things (IoT) networks, or other networks. The IoT network may, for example, include internet of vehicles (IoV). The communication methods in IoV systems are collectively referred to as vehicle-to-everything (V2X, where X can represent anything), for example, V2X may include: vehicle-to-vehicle (V2V) communication, vehicle-to-infrastructure (V2I) communication, vehicle-to-pedestrian (V2P) communication, or vehicle-to-network (V2N) communication, etc.

The wireless communication system provided in this embodiment can be applied to, but is not limited to, at least one of the following communication scenarios: uplink communication scenarios, downlink communication scenarios, and sidelink communication scenarios.

In some embodiments, the terminal device 120 is a zero-power device.

A zero-power device may also be referred to as at least one of the following: an ultra-low-power device, a low-power device, a passive IoT (Passive IoT) device, or an ambient power enabled IoT (Ambient IoT/A-IoT) device.

The communication technology implemented through zero-power devices may be referred to as zero-power communication technology, or ultra-low-power communication technology, or low-power communication technology, or Ambient IoT/A-IoT technology, or Passive IoT technology, or zero-power IoT technology.

A zero-power device can harvest energy from the environment (such as radio frequency energy, solar energy, light energy, thermal energy, mechanical energy, kinetic energy, etc.) to obtain energy for communication. Generally, based on the energy source and usage, zero-power devices can be classified into the following three types.
(1) Passive devices: Passive devices do not require built-in batteries. When a passive device is close to a network device (such as a reader in an RFID system), the passive device is within the near-field range formed by the antenna radiation of the network device. Therefore, the antenna of the passive device generates an induced current through electromagnetic induction, which drives the low-power chip circuit of the passive device. This enables demodulation of forward link signals, modulation of backward link signals, and other tasks. For the backscatter link, the passive device can transmit signals using backscatter or extremely low-power active transmission. Neither the forward link nor the backward link of a passive device requires a built-in battery to drive, so a passive device can be considered a zero-power device.

In addition to not requiring a battery, the radio frequency circuit and baseband circuit of a passive device are also very simple, for example, they do not require components such as a low-noise amplifier (LNA), power amplifier (PA), crystal oscillator, or analog-to-digital converter (ADC). This gives passive devices many advantages, such as small size, light weight, very low cost, and long service life.

Passive devices can also support other energy harvesting methods, such as harvesting energy from the environment (e.g., solar energy, light energy, thermal energy, kinetic energy, mechanical energy, etc.) to obtain the energy needed to drive the circuit, thereby enabling communication.

(2) Semi-passive devices. Semi-passive devices do not have conventional batteries installed. They can use radio frequency energy harvesting modules to harvest radio wave energy or use energy harvesting modules to harvest energy from the environment (e.g., solar energy, light energy, thermal energy, kinetic energy, mechanical energy, etc.), while storing the harvested energy in an energy storage unit (such as a capacitor). After the energy storage unit obtains energy, it can drive the low-power chip circuit of the semi-passive device. This enables demodulation of forward link signals, modulation of backward link signals, and other tasks. For the backscatter link, the semi-passive device can use backscatter for signal transmission. Semi-passive devices may also have active transmission capabilities, meaning that in addition to backscatter communication, the backward link can also use active transmission for communication.

Neither the forward link nor the backward link of a semi-passive device requires a built-in battery to drive. Although the energy stored in the capacitor is used during operation, this energy comes from the radio frequency energy or environmental energy harvested by the energy harvesting module. Therefore, a semi-passive device can also be considered a zero-power device.

Semi-passive devices inherit many advantages of passive devices, such as small size, light weight, very low cost, and long service life.

(3) Active devices. Active devices may have built-in batteries. The battery is used to drive the low-power chip circuit of the active device, enabling demodulation of forward link signals, modulation of backward link signals, and other tasks. Signal transmission on the backward link of an active device may not consume the device's own power; instead, backscatter can be used for backward link transmission, achieving a zero-power effect. Active devices may also have active transmission capabilities, meaning that in addition to backscatter communication, the backward link can also use active transmission for communication.

Although they have built-in batteries, these active devices have extremely low power consumption and complexity, allowing the battery capacity to be set at a small range, thereby achieving low cost and small size. The built-in battery of an active device can also serve as an energy storage unit, storing environmental energy harvested by the energy harvesting module, which enables long maintenance cycles or even maintenance-free operation for active devices.

In active devices, built-in batteries are used for power supply to increase the communication distance, such as extending the read/write distance of electronic tags, thereby improving communication reliability. Therefore, active devices are applied in scenarios with relatively high requirements for communication distance, reading latency, etc.

In terms of communication methods, zero-power devices can support backscatter and/or active transmission communication methods. Generally, based on the transmitter type, zero-power devices can be classified into the following three types.
(1) Backscatter-based zero-power devices. These devices use backscatter, as described above, for uplink data transmission. These devices do not have an active transmitter capable of active transmission but only have a backscatter transmitter. Therefore, when such devices send uplink data, they require the network device to provide a carrier wave. The devices perform backscatter based on the carrier wave to achieve uplink data transmission.
(2) Active transmitter-based zero-power devices. These devices use an active transmitter with active transmission capability for uplink data transmission. Therefore, when such devices send uplink data, they can use their own active transmitter to send uplink data without requiring the network device to provide a carrier wave. Examples of active transmitters suitable for such devices include ultra-low-power ASK transmitters, ultra-low-power FSK transmitters, etc. Based on current implementations, the overall power consumption of such transmitters can be reduced to 400-600 microwatts when transmitting a 100-microwatt signal.
(3) Zero-power devices with both backscatter and active transmitters. These devices can support both backscatter and active transmitters. Such devices can determine whether to use backscatter or active transmission based on different situations (such as different battery levels, different available environmental energy sources) or based on scheduling by the network device.

FIG. 2 illustrates a communication system 200 provided by an exemplary embodiment of the disclosure. The communication system 200 includes a network device 110 and a terminal device 120, which belongs to a zero-power device.

The terminal device 120, which belongs to a zero-power device, includes an energy harvesting module 321. Optionally, in addition to the energy harvesting module 321, the terminal device 120 also includes a backscatter communication module 322. Optionally, in addition to the energy harvesting module 321, the terminal device 120 also includes a logic processing module 323, which, for example, includes a low-power computing module. Optionally, in addition to the energy harvesting module 321, the terminal device 120 also includes a sensor module 324. Optionally, in addition to the energy harvesting module 321, the terminal device 120 also includes a memory (not illustrated in the figure). Optionally, in addition to the energy harvesting module 321, the terminal device 120 also includes one or more of the backscatter communication module 322, the logic processing module 323, the sensor module 324, and the memory.

For example, the energy harvesting module 321 can harvest energy carried by radio waves in space, or light energy, kinetic energy, mechanical energy, solar energy, etc., thereby powering the various modules of the terminal device 120. After the terminal device 120 obtains energy, it can receive signals from the network device 110 through a receiver, reflect signals to the network device 110 through the backscatter communication module 322, or transmit signals to the network device 110 through a transmitter (not illustrated in the figure). The data reflected or transmitted by the terminal device 120 may be its own stored data (such as identity information or pre-written information, such as the production date, brand, manufacturer, etc., of a product). The sensor module 324 may include various sensors, and the terminal device 120 can report data collected by these sensors based on a low-power mechanism. The memory is used to store basic information (such as item identifiers, etc.) or to store sensor data such as ambient temperature, ambient humidity, etc.

The terminal device 120 can use the logic processing module 323 to perform simple operations such as signal demodulation, decoding, encoding, or modulation. The hardware design can be very simple, making the terminal device 120 low-cost and compact in size.

It should be understood that the modules included in the terminal device 120 illustrated in FIG. 2 are merely an example and not a limitation.

FIG. 3 illustrates a schematic diagram of radio frequency (RF) power harvesting performed by the energy harvesting module 321. Radio frequency power harvesting is based on the principle of electromagnetic induction. The RF module utilizes electromagnetic induction and connects with a capacitor C and a load resistor RL in parallel to harvest energy from electromagnetic waves in space, obtaining the energy required to drive the zero-power device. For example, this energy can be used to drive low-power demodulation modules, modulation modules, sensors, memory reading, etc. Based on this, the zero-power device achieves the effect of not requiring a traditional battery.

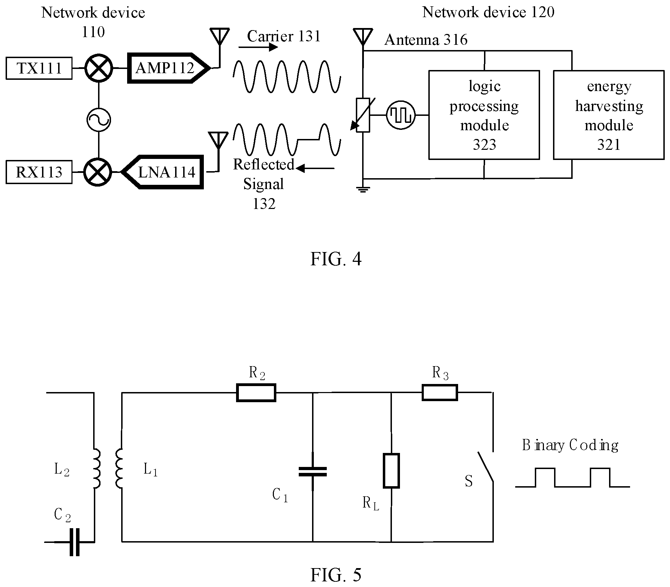

FIG. 4 illustrates a schematic diagram of backscatter communication performed by the backscatter communication module 322. The terminal device 120 receives a wireless signal carrier 131 transmitted by the transmit module (TX) 111 of the network device 110 using an amplifier (AMP) 112, modulates the wireless signal carrier 131, loads the information to be transmitted using the logic processing module 323, and harvests RF energy using the energy harvesting module 321. The terminal device 120 radiates the modulated reflected signal 132 using an antenna 316. This information transmission process is referred to as backscatter communication. The receive module (RX) 113 of the network device 110 receives the modulated reflected signal 132 using a low-noise amplifier (LNA) 114. Backscatter and load modulation functions are closely related. Load modulation adjusts and controls the circuit parameters of the oscillating circuit of the terminal device 120 according to the rhythm of the data stream, causing changes in parameters such as the impedance of the terminal device 120, thereby completing the modulation process.

Load modulation techniques mainly include resistive load modulation and capacitive load modulation. FIG. 5 illustrates a schematic diagram of resistive load modulation. In resistive load modulation, the load resistor RL is connected in parallel with a third resistor R3. A switch S, controlled based on binary coding, is turned on or off. The connection or disconnection of the third resistor R3 causes voltage changes in the circuit. The load resistor RL remains connected in parallel with the first capacitor C1, and the load resistor RL remains connected in series with the second resistor R2. The second resistor R2 remains connected in series with the first inductor L1. The first inductor L1 is coupled with the second inductor L2, and the second inductor L2 remains connected in series with the second capacitor C2. For example, amplitude shift keying (ASK) modulation can be achieved, where modulation and transmission of signals are realized by adjusting the amplitude of the backscattered signal from the terminal device. Similarly, in capacitive load modulation, turning the capacitor on or off changes the resonant frequency of the circuit, achieving frequency shift keying (FSK) modulation, where modulation and transmission of signals are realized by adjusting the operating frequency of the backscattered signal from the terminal device.

The terminal device 120 can use load modulation to modulate information onto the incoming signal, thereby implementing the process of backscatter communication.

Therefore, zero-power devices have the following significant advantages.
(1) They do not need to actively transmit signals, thus eliminating the need for complex RF chains such as PAs and RF filters.
(2) They do not need to actively generate high-frequency signals, thus eliminating the need for high-frequency crystal oscillators.
(3) By utilizing backscatter communication, signal transmission does not consume their own energy.

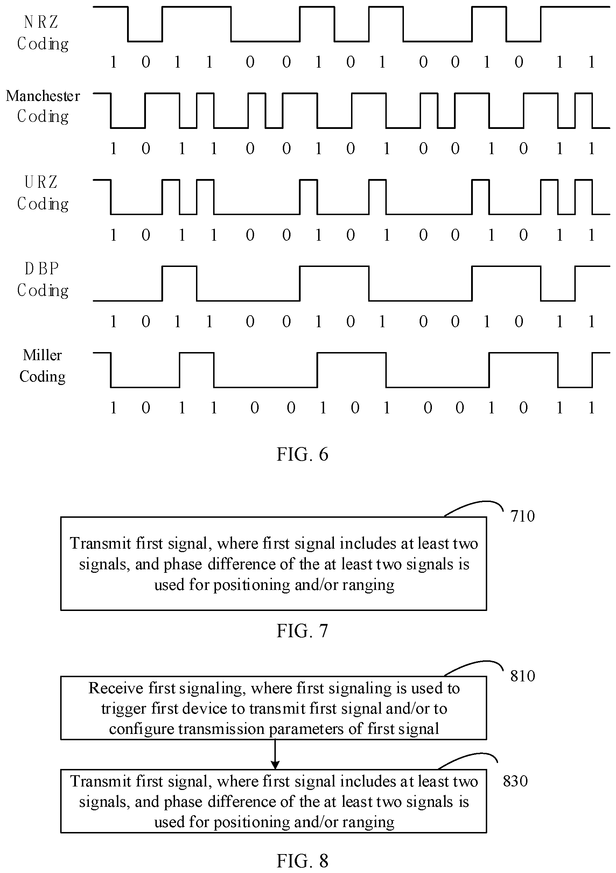

FIG. 6 illustrates a schematic diagram of the encoding method adopted by the wireless communication system illustrated in FIG. 1 or the communication system illustrated in FIG. 2. The data transmitted in the wireless communication system illustrated in FIG. 1 or the communication system illustrated in FIG. 2 can be represented using different forms of codes for binary "1" and "0," meaning different pulse signals represent "0" and "1." The following encoding methods are introduced here:

Not return to zero (NRZ) Encoding: In NRZ encoding, a high level represents binary "1," and a low level represents binary "0." FIG. 6 illustrates a schematic diagram of the signal levels for the binary data 101100101001011 encoded using the NRZ method.

Manchester Encoding: Manchester encoding is also known as split-phase coding. In Manchester encoding, binary values are represented by changes in signal level (rising or falling) at the midpoint of the bit period. A negative transition at the midpoint represents binary "1," while a positive transition at the midpoint represents binary "0." Manchester encoding is often used for data transmission from zero-power devices to network devices when using carrier-based load modulation or backscatter modulation, as it helps detect data transmission errors. This is because in Manchester encoding, a "no change" state within the bit period is not allowed. When multiple zero-power devices simultaneously send data bits with different values, the received rising and falling edges cancel each other out, resulting in a continuous carrier signal throughout the bit period. Since this state is not allowed, the network device can use this error to determine the specific location of a collision. FIG. 6 illustrates a schematic diagram of the signal levels for the binary data 101100101001011 encoded using the Manchester method.

Unipolar return to zero (URZ) Encoding: In URZ encoding, a high level during the first half of the bit period represents binary "1," while a low-level signal that persists throughout the entire bit period represents binary "0." FIG. 6 illustrates a schematic diagram of the signal levels for the binary data 101100101001011 encoded using the URZ method.

Differential binary phase (DBP) Encoding: In DBP encoding, any transition within the first half of the bit period represents binary "0," and no transition represents binary "1." Additionally, the signal level inverts at the beginning of each bit period. This makes it easier for the receiver to reconstruct the bit timing. FIG. 6 illustrates a schematic diagram of the signal levels for the binary data 101100101001011 encoded using the DBP method.

Miller Encoding: In Miller encoding, any transition within the first half of the bit period represents binary "1," while an unchanged signal level throughout the next bit period represents binary "0." A transition occurs at the beginning of the bit period, making it easier for the receiver to reconstruct the bit timing. FIG. 6 illustrates a schematic diagram of the signal levels for the binary data 101100101001011 encoded using the Miller method.

Differential Encoding: In differential encoding, each binary "1" to be transmitted causes a change in the signal level, while for binary "0," the signal level remains unchanged.

It should be noted that the above encoding methods are examples of encoding methods that can be adopted by the wireless communication system illustrated in FIG. 1 or the communication system illustrated in FIG. 2 and are not intended to be limiting.

Due to its significant advantages such as extremely low cost, ultra-low power consumption, and compact size, the communication system illustrated in FIG. 2 can be widely applied across various industries, such as vertical industry sectors like logistics, smart warehousing, smart agriculture, energy and power, and the industrial internet of things (IIoT). It can also be used in personal applications like smart wearables and smart homes.

For example, it can be applied in at least the following four types of scenarios.
(1) Object identification, such as management of logistics, production line products, and supply chain management.
(2) Environmental monitoring, such as temperature, humidity, and hazardous gas monitoring in working or natural environments.
(3) Positioning, such as indoor positioning, smart item tracking, and item positioning on production lines.
(4) Smart control, such as intelligent control of various appliances in smart homes (e.g., turning air conditioners on/off, adjusting temperatures) and smart control of various facilities in agricultural greenhouses (e.g., automatic irrigation, fertilization).

In this disclosure, an "agreement" can be implemented by pre-storing corresponding codes, tables, or other means that can be used to indicate relevant information in a communication device (e.g., a terminal device or a network device). The disclosure does not impose any limitations on its specific implementation method. A communication protocol agreement can also be understood as predefined by the communication protocol.

FIG. 7 illustrates a schematic flowchart of a signal transmission method provided by an exemplary embodiment of the disclosure. The method is performed by a first device and includes the following.

Step 710: Transmit a first signal, where the first signal includes at least two signals, and a phase difference of the at least two signals is used for positioning and/or ranging.

In some embodiments, the first signal is referred to as a positioning reference signal, or a positioning assistance signal, or a reference signal.

In some embodiments, the sender of the first signal is the first device, and the receiver of the second signal is a second device.

It should be noted that, in the embodiments of the disclosure, "at least two signals" may be relative to the sender of the first signal (i.e., the first device), or may be relative to the receiver of the first signal (e.g., the second device).

In some embodiments, "at least two signals" is relative to the first device. When the first device transmits the first signal, the first signal includes at least two signals, which may also be understood as the first signal including at least two sub-signals, or as the first signal including at least two signal segments, or as the first signal including at least two signal portions. Therefore, the phase difference of the at least two signals may also be understood as the phase difference of the at least two sub-signals, or as the phase difference of the at least two signal segments, or as the phase difference of the at least two signal portions.

In some embodiments, "at least two signals" is relative to the first device. The first signal is a collective term for at least two signals, and the at least two signals are two associated but independent signals. The first device transmits the first signal, that is, the first device transmits at least two associated signals.

In some embodiments, the association of the at least two signals is reflected in one or more of the following aspects.

The at least two signals correspond to the same positioning result.

The at least two signals correspond to the same ranging result.

The at least two signals correspond to the same positioning task.

The at least two signals correspond to the same ranging task.

The at least two signals are repeated signals.

The at least two signals occupy the same time-domain resources.

The at least two signals both belong to the first signal.

In some embodiments, "at least two signals" is relative to the second device. When the first device transmits the first signal, the first signal does not include at least two signals; instead, the second device divides the first signal into at least two signals. Therefore, the phase difference of the at least two signals may also be understood as the phase difference of the at least two signals obtained by the second device dividing the first signal, or as the phase difference of the at least two signal segments obtained by the second device dividing the first signal, or as the phase difference of the at least two signal portions obtained by the second device dividing the first signal.

It should be noted that, in the embodiments of the disclosure, positioning/ranging may be relative to the sender of the first signal (i.e., the first device), or may be relative to the receiver of the first signal (e.g., the second device).

In some embodiments, the second device obtains the phase difference of the at least two signals, and based on this phase difference, obtains the positioning result of the first device, and/or, based on this phase difference, obtains the distance between the first device and the second device.

In some embodiments, the second device obtains the phase difference of the at least two signals, and based on this phase difference, obtains the positioning result of the second device, and/or, based on this phase difference, obtains the distance between the second device and the first device.

In some embodiments, the first device is implemented as the network device 110 illustrated in FIG. 1, or as the terminal device 120 illustrated in FIG. 1, or as the terminal device 120 being a zero-power device as illustrated in FIG. 2.

A zero-power device may also be referred to as at least one of the following: an ultra-low-power device, a low-power device, a passive IoT device, an A-IoT device.

In summary, the method provided in the embodiments of the disclosure supports positioning and/or ranging through phase difference, offers high positioning accuracy and/or measurement accuracy, and is simple to implement. Due to the simple calculation principle of phase difference, the scheme for positioning and/or ranging using phase difference exhibits high robustness and is minimally affected by signal transmission quality and signal structure. Even when the capability of the first device is relatively weak-for example, when the first device is a zero-power device, which may have issues such as narrow supported bandwidth, poor stability and accuracy, and difficulty in ensuring high-precision or high-stability transmission of signals, or difficulty in transmitting signals with complex structures-it is still possible to achieve relatively high-precision positioning and/or ranging through the method provided by the embodiments of the disclosure.

Due to the simple design of the first signal, transmission resources required for positioning and/or ranging can be saved. Particularly when the first device belongs to a zero-power device, the overall power consumption required for positioning and/or ranging is significantly reduced due to the low or even zero power consumption of such devices, thereby improving the overall efficiency within the communication system.

In some embodiments, step 710 may be implemented as step 830. Optionally, in addition to step 830, the signal transmission method may further include step 810, as illustrated in FIG. 8.

FIG. 8 illustrates a schematic flowchart of a signal transmission method provided by an exemplary embodiment of the disclosure. The method is performed by a first device and includes the following.

Step 810: Receive first signaling, where the first signaling is used to trigger the first device to transmit a first signal and/or to configure transmission parameters of the first signal.

In some embodiments, the first signal includes at least two signals, and the transmission parameters of the first signal include at least one of the following: bandwidth of the first signal; bandwidth of the at least two signals; frequency interval between the at least two signals; time-domain length of the first signal; time-domain length of the at least two signals; time-domain start position of the first signal; time-domain start position of the at least two signals; time-domain end position of the first signal; time-domain end position of the at least two signals; number of time-domain units occupied by the first signal; number of time-domain units occupied by the at least two signals; transmission period of the first signal; transmission period of the at least two signals.

In some embodiments, a channel carrying the first signaling is scrambled by a first radio network temporary identifier (RNTI).

In some embodiments, the first RNTI is used to indicate that the first signaling is related to positioning and/or ranging.

In some embodiments, the first RNTI is used to indicate that the first signaling is related to phase-difference-based positioning and/or phase-difference-based ranging. For example, the first RNTI is an RNTI marked as Phase-Positioning.

In some embodiments, the first signaling includes a first information field, and a bit value of the first information field is a first value.

In some embodiments, when the bit value of the first information field is the first value, it indicates that the first signaling is related to positioning and/or ranging.

In some embodiments, when the bit value of the first information field is the first value, it indicates that the first signaling is related to phase-difference-based positioning and/or phase-difference-based ranging.

In some embodiments, the type of the first signaling includes one of the following: downlink control information (DCI); radio resource control (RRC) signaling; media access control (MAC) control element (CE).

In some embodiments, the first device separately receives first signaling used to configure transmission parameters of the first signal and used to trigger the first device to transmit the first signal.

For example, RRC signaling or a MAC CE received by the first device is used to configure all transmission parameters of the first signal, and DCI received is used to trigger the first device to transmit the first signal.

For example, RRC signaling or a MAC CE received by the first device is used to configure a first portion of transmission parameters of the first signal, and DCI received is used to trigger the first device to transmit the first signal and to configure a second portion of transmission parameters of the first signal.

For example, RRC signaling received by the first device is used to configure a first portion of transmission parameters of the first signal, a MAC CE received is used to configure a second portion of transmission parameters of the first signal, and DCI received is used to trigger the first device to transmit the first signal.

In some embodiments, the first signaling is sent by a network device.

In some embodiments, the first signaling is sent by a second device.

Step 830: Transmit the first signal, where the first signal includes at least two signals, and a phase difference of the at least two signals is used for positioning and/or ranging.

In some embodiments, referring to step 710, the "at least two signals" mentioned in step 830 may also be understood as "at least two sub-signals", or as "at least two signal portions", or as "at least two signal segments". Similarly, the "phase difference of the at least two signals" mentioned in step 830 may also be understood as "phase difference of the at least two sub-signals", or as "phase difference of the at least two signal portions", or as "phase difference of the at least two signal segments".

In some embodiments, the at least two signals are repeated signals at different frequency positions; or, the at least two signals are different signals at different frequency positions.

In some embodiments, the at least two signals include a second signal and a third signal. Here, the second signal is any one of the at least two signals, and the third signal is a signal adjacent to the second signal among the at least two signals.

In some embodiments, the second signal may also be understood as a first signal portion. Similarly, the third signal may also be understood as a second signal portion. The first signal portion is any one of the at least two signal portions, and the second signal portion is a signal portion adjacent to the first signal portion among the at least two signal portions.

In some embodiments, the second signal may also be understood as a first signal segment. Similarly, the third signal may also be understood as a second signal segment. The first signal segment is any one of the at least two signal segments, and the second signal segment is a signal segment adjacent to the first signal segment among the at least two signal segments.

In some embodiments, the second signal may also be understood as a first sub-signal. Similarly, the third signal may also be understood as a second sub-signal. The first sub-signal is any one of the at least two sub-signals, and the second sub-signal is a sub-signal adjacent to the first sub-signal among the at least two sub-signals.

In some embodiments, there is a frequency interval between the second signal and the third signal, which may also be understood as the frequency-domain resources occupied by the second signal and the frequency-domain resources occupied by the third signal being discontinuous, or as the frequency interval between the second signal and the third signal not being zero.

In some embodiments, there is no frequency interval between the second signal and the third signal, which may also be understood as the frequency-domain resources occupied by the second signal and the frequency-domain resources occupied by the third signal being continuous.

In some embodiments, there is no frequency interval between the second signal and the third signal, which may also be understood as the frequency interval between the second signal and the third signal being zero.

In some embodiments, there is no frequency interval between the second signal and the third signal, which may also be understood as the frequency-domain resources occupied by the second signal and the frequency-domain resources occupied by the third signal having an overlapping portion.

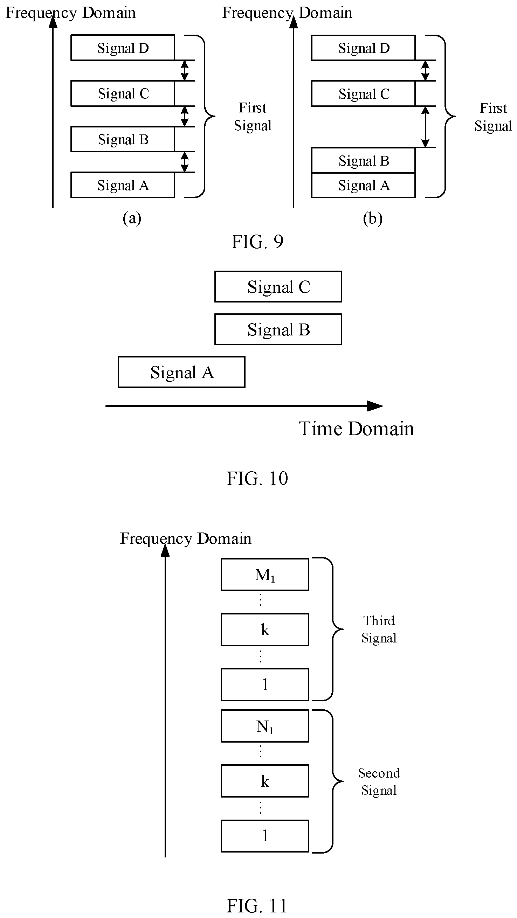

In some embodiments, each frequency interval existing among the at least two signals is equal or unequal. For example, as illustrated in FIG. 9(a), the at least two signals include signal A, signal B, signal C, and signal D, and the frequency intervals between each adjacent signal are equal. For example, as illustrated in FIG. 9(b), the at least two signals include signal A, signal B, signal C, and signal D, where there is no frequency interval between signal A and signal B (i.e., the frequency interval between signal A and signal B is zero), and the frequency interval between signal B and signal C is greater than the frequency interval between signal C and signal D.

In some embodiments, the frequency interval is specified by a communication protocol, configured by a network device, or determined through negotiation between the first device and the second device
In some embodiments, the at least two signals are identical in at least one of the following aspects: bandwidth size; number of occupied frequency-domain units; time-domain length; time-domain start position; time-domain end position; number of occupied time-domain units.

Herein, a frequency-domain unit includes, for example, at least one of: a carrier, a physical resource block (PRB), a bandwidth part (BWP), a subband, a subchannel, a subcarrier, or a unit based on other frequency-domain units.

A time-domain unit includes, for example, at least one of: a frame, a subframe, a slot, a mini-slot, a sub-slot, a symbol, a symbol group, or a unit based on other time-domain units.

In some embodiments, a waveform of a first signal includes one of the following: orthogonal frequency-division multiplexing (OFDM) waveform; discrete fourier transform-spread OFDM (DFT-s OFDM) waveform; triangular waveform; square waveform; pulse waveform; continuous waveform.

In some embodiments, a subcarrier spacing of the first signal is 15 kHz, 30 kHz, 60 kHz, 120 kHz, 240 kHz, 480 kHz, 312.5 kHz, or 31.25 kHz.

In some embodiments, there is a time interval between the first device receiving first signaling and transmitting the first signal. Optionally, the time interval is specified by a communication protocol, configured by a network device, or determined through negotiation between the first device and a second device.

In some embodiments, the first signal is a unicast signal, a multicast signal, or a broadcast signal. Alternatively, it can be understood that the receiver of the first signal may be one communication device or multiple communication devices.

In some embodiments, the at least two signals occupy the same time-domain resources. That is, the time-domain start positions of the at least two signals are the same, the time-domain end positions are the same, and the numbers of occupied time-domain units are the same.

In some embodiments, the at least two signals occupy different time-domain resources. That is, one or more of the time-domain start positions, time-domain end positions, and numbers of occupied time-domain units of the at least two signals are different.

Illustratively, as illustrated in FIG. 10, the at least two signals include signal A, signal B, and signal C. Among the at least two signals, there are signals occupying different time-domain resources (e.g., signal A and signal B, signal A and signal C), as well as signals occupying the same time-domain resources (e.g., signal B and signal C).

In some embodiments, the at least two signals include a pilot signal, and/or a data signal, and/or a reference signal.

In some embodiments, the pilot signal includes a signal used for demodulating and/or decoding the data signal. Alternatively, it can be understood that if the at least two signals include a pilot signal, then a phase difference of the pilot signal is used for positioning and/or ranging, and the pilot signal may also be used for demodulating and/or decoding the data signal.

In some embodiments, the reference signal is a reference signal dedicated to positioning and/or ranging. Alternatively, the reference signal is not a reference signal dedicated to positioning and/or ranging, that is, besides being used for positioning and ranging, the reference signal may also serve other purposes, such as synchronization, measurement, demodulation, or one or more of these functions.

In some embodiments, the reference signal is dedicated to phase-difference-based positioning and/or phase-difference-based ranging.

In some embodiments, a type of the reference signal includes at least one of the following: positioning reference signal (PRS), sidelink PRS (SL-PRS), sounding reference signal (SRS), demodulation reference signal (DMRS), enhanced SRS (E-SRS), tracking reference signal (TRS), carrier phase reference signal (CPRS), channel state information reference signal (CSI-RS).

In some embodiments, a phase difference of the at least two signals is determined based on signals on at least one set of frequency components. One set of frequency components includes a first frequency component and a second frequency component.

In some embodiments, a signal on the first frequency component corresponds to a k-th frequency-domain unit in frequency-domain resources occupied by a second signal, and a signal on the second frequency component corresponds to a k-th frequency-domain unit in frequency-domain resources occupied by a third signal, where k is an integer greater than or equal to 1.

Illustratively, as illustrated in FIG. 11, a second signal occupies N₁ frequency-domain units in total, and a signal on a first frequency component corresponds to a k-th frequency-domain unit among them, where 1 ≤ k ≤ N₁. A third signal occupies M₁ frequency-domain units in total, and a signal on a second frequency component corresponds to a k-th frequency-domain unit among them, where 1 ≤ k ≤ M₁. Herein, N₁ and M₁ are equal or unequal, N₁ is an integer greater than 0, and M₁ is an integer greater than 0.

It should be noted that in the embodiments of the disclosure, numbering of frequency-domain units and time-domain units starts from 1, but it is not excluded that numbering of frequency-domain units and time-domain units may start from 0. That is, k may be an integer greater than or equal to 0, and i may be an integer greater than or equal to 0.

In some embodiments, a signal on the first frequency component corresponds to a k-th frequency-domain unit and an i-th time-domain unit in time-frequency resources occupied by the second signal, and a signal on the second frequency component corresponds to a k-th frequency-domain unit and an i-th time-domain unit in time-frequency resources occupied by the third signal, where k is an integer greater than or equal to 1, and i is an integer greater than or equal to 1.

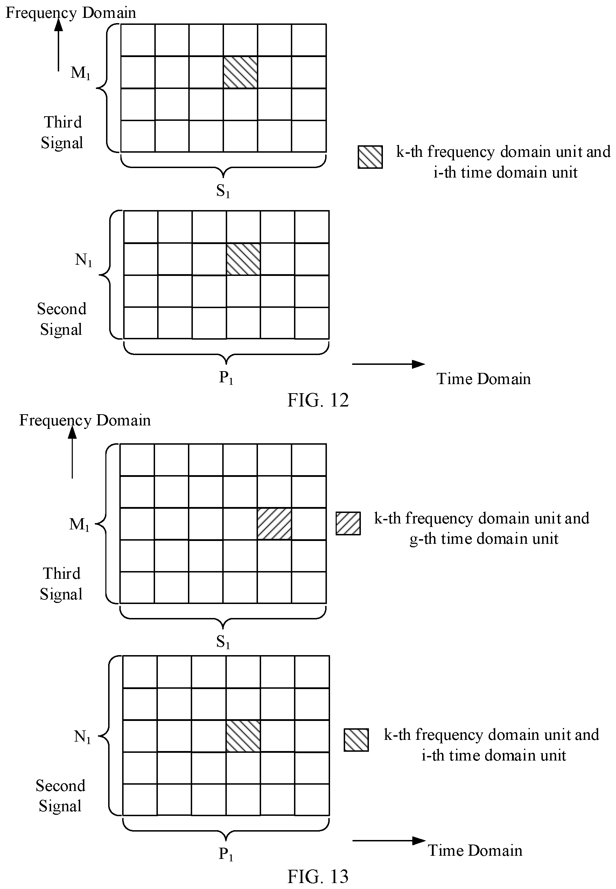

Illustratively, as illustrated in FIG. 12, the second signal occupies N₁ frequency-domain units and P₁ time-domain units in total, and the signal on the first frequency component corresponds to a k-th frequency-domain unit and an i-th time-domain unit among them, where 1 ≤ k ≤ N₁ and 1 ≤ i ≤ P₁. The third signal occupies M₁ frequency-domain units and S₁ time-domain units in total, and the signal on the second frequency component corresponds to a k-th frequency-domain unit and an i-th time-domain unit among them, where 1 ≤ k ≤ M₁ and 1 ≤ i ≤ S₁. Herein, N₁ and M₁ are equal or unequal, and P₁ and S₁ are equal or unequal. N₁ is an integer greater than 0, M₁ is an integer greater than 0, P₁ is an integer greater than 0, and S₁ is an integer greater than 0.

Optionally, the P₁ time-domain units occupied by the second signal are the same as the S₁ time-domain units occupied by the third signal. Optionally, the P₁ time-domain units occupied by the second signal are different from the S₁ time-domain units occupied by the third signal.

In some embodiments, a signal on the first frequency component corresponds to a k-th frequency-domain unit and an i-th time-domain unit in time-frequency resources occupied by the second signal, and a signal on the second frequency component corresponds to a k-th frequency-domain unit and a g-th time-domain unit in time-frequency resources occupied by the third signal, where k is an integer greater than or equal to 1, i is an integer greater than or equal to 1, g is an integer greater than or equal to 1, and i and g are different.

Illustratively, as illustrated in FIG. 13, the second signal occupies N₁ frequency-domain units and P₁ time-domain units in total, and the signal on the first frequency component corresponds to a k-th frequency-domain unit and an i-th time-domain unit among them, where 1 ≤ k ≤ N₁ and 1 ≤ i ≤ P₁. The third signal occupies M₁ frequency-domain units and S₁ time-domain units in total, and the signal on the second frequency component corresponds to a k-th frequency-domain unit and a g-th time-domain unit among them, where 1 ≤ k ≤ M₁ and 1 ≤ g ≤ S₁. Herein, N₁ and M₁ are equal or unequal, and P₁ and S₁ are equal or unequal. N₁ is an integer greater than 0, M₁ is an integer greater than 0, P₁ is an integer greater than 0, and S₁ is an integer greater than 0. Optionally, the P₁ time-domain units occupied by the second signal are the same as or different from the S₁ time-domain units occupied by the third signal.

In some embodiments, a signal on the first frequency component corresponds to a k-th frequency-domain unit and an i-th time-domain unit in time-frequency resources occupied by a second signal, and a signal on the second frequency component corresponds to a q-th frequency-domain unit and a g-th time-domain unit in time-frequency resources occupied by a third signal, where q is an integer greater than or equal to 1. Herein, i is an integer greater than or equal to 1, g is an integer greater than or equal to 1, and i and g are different. Herein, k is an integer greater than or equal to 1, q is an integer greater than or equal to 1, and k and q are different.

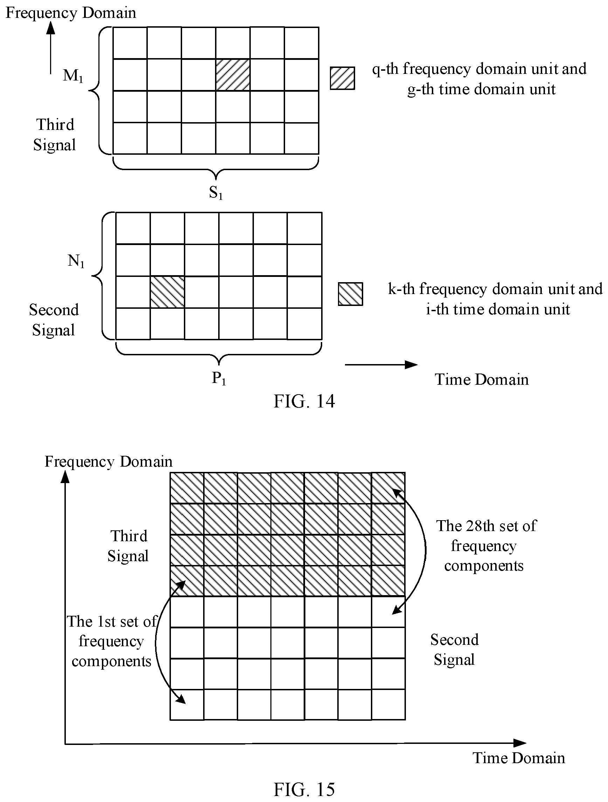

Illustratively, as illustrated in FIG. 14, the second signal occupies N₁ frequency-domain units and P₁ time-domain units in total, and the signal on the first frequency component corresponds to a k-th frequency-domain unit and an i-th time-domain unit among them, where 1 ≤ q ≤ N₁ and 1 ≤ i ≤ P₁. The third signal occupies M₁ frequency-domain units and S₁ time-domain units in total, and the signal on the second frequency component corresponds to a q-th frequency-domain unit and a g-th time-domain unit among them, where 1 ≤ q ≤ M₁ and 1 ≤ g ≤ S₁. Herein, N₁ and M₁ are equal or unequal, and P₁ and S₁ are equal or unequal. N₁ is an integer greater than 0, M₁ is an integer greater than 0, P₁ is an integer greater than 0, and S₁ is an integer greater than 0. Optionally, the P₁ time-domain units occupied by the second signal are the same as or different from the S₁ time-domain units occupied by the third signal.

In some embodiments, a phase difference of the at least two signals is determined based on a conjugate multiplication result corresponding to signals on one set of frequency components.

In some embodiments, the phase difference of the at least two signals is determined based on a first statistical value, where the first statistical value is an average, median, minimum, or maximum of conjugate multiplication results corresponding to signals on multiple sets of frequency components. Herein, the multiple sets of frequency components are multiple sets among the at least one set of frequency components.

In some embodiments, the conjugate multiplication result corresponding to signals on one set of frequency components includes a conjugate multiplication result of a signal on the first frequency component and a signal on the second frequency component.

In some embodiments, the signal on the first frequency component is determined based on one or more of a first signal amplitude, a first signal phase, a first Fourier transform point count, or the value of k.

In some embodiments, if the signal on the first frequency component corresponds to a k-th frequency-domain unit in frequency-domain resources occupied by the second signal, then the first signal amplitude is a signal amplitude of the second signal at the k-th frequency-domain unit, the first signal phase is a signal phase of the second signal at the k-th frequency-domain unit, and the first Fourier transform point count is a fast Fourier transform (FFT) point count of the second signal.

In some embodiments, if the signal on the first frequency component corresponds to a k-th frequency-domain unit and an i-th time-domain unit in time-frequency resources occupied by the second signal, then the first signal amplitude is a signal amplitude of the second signal at the k-th frequency-domain unit and the i-th time-domain unit, the first signal phase is a signal phase of the second signal at the k-th frequency-domain unit and the i-th time-domain unit, and the first Fourier transform point count is an FFT point count of the second signal.

In some embodiments, the signal on the first frequency component is determined based on a product of the first signal amplitude and a first product. The first product is determined based on a numerical value e and a first sum. The first sum is a sum of a second product and a third product. The second product is a product of a reciprocal of the first Fourier transform point count, k, time, a numerical value j, a numerical value Π, and 2. The third product is a product of the numerical value j and the first signal phase.

In some embodiments, taking as an example that a signal on the first frequency component corresponds to a k-th frequency-domain unit and an i-th time-domain unit in time-frequency resources occupied by the second signal, when transmitting the first signal, the signal *x*1*_{k,i}* on the first frequency component may be expressed as formula (1). $x {1}_{k , i} = {α}_{k , i} ∗ e \left(j\frac{2 π}{{N}_{fft}}∗k∗t+j∗{θ}_{k , i}\right)$

Where *α_{k,i}* is the first signal amplitude, *θ*_{*k*,*i*} is the first signal phase, and *N_{fft}* is the first Fourier transform point count. t is the time at which the first device transmits the first signal, and for ease of calculation, it can be assumed that t=0.

In some embodiments, taking as an example that a signal on the first frequency component corresponds to a k-th frequency-domain unit and an i-th time-domain unit in time-frequency resources occupied by the second signal, when receiving the first signal, the signal *y*1*_{k,i}* on the first frequency component may be expressed as formula (2). $y {1}_{k , 1} = h {1}_{k , i} ∗ {α}_{k , i} ∗ e \left(j\frac{2 π}{{N}_{fft}}∗k∗T+j∗{θ}_{k , i}\right)$

Where *α_{k,i}* is the first signal amplitude, *θ*_{*k*,*i*} is the first signal phase, and *N_{fft}* is the first Fourier transform point count. *h*1*_{k,i}* is the channel coefficient corresponding to the channel carrying the second signal. Assuming the time is T, where T represents the time at which the second device receives the first signal, and *T* = *d*/*v_{c}*, where *v_{c}* is the speed of light and d is the distance between the first device and the second device.

In some embodiments, a signal on the second frequency component is determined based on one or more of a second signal amplitude, a second signal phase, a first frequency interval, a second Fourier transform point count, or the value of k.

In some embodiments, if the signal on the second frequency component corresponds to a k-th frequency-domain unit in frequency-domain resources occupied by a third signal, then the second signal amplitude is a signal amplitude of the third signal at the k-th frequency-domain unit, the second signal phase is a signal phase of the third signal at the k-th frequency-domain unit, the second Fourier transform point count is an FFT point count of the third signal, and the first frequency interval is a frequency interval between the k-th frequency-domain unit of the third signal and the k-th frequency-domain unit of the second signal.

In some embodiments, if the signal on the second frequency component corresponds to a k-th frequency-domain unit and an i-th time-domain unit in time-frequency resources occupied by the third signal, then the second signal amplitude is a signal amplitude of the third signal at the k-th frequency-domain unit and the i-th time-domain unit, the second signal phase is a signal phase of the third signal at the k-th frequency-domain unit and the i-th time-domain unit, the second Fourier transform point count is an FFT point count of the third signal, and the first frequency interval is a frequency interval between the k-th frequency-domain unit of the third signal and the k-th frequency-domain unit of the second signal.

The case where the signal on the second frequency component corresponds to a q-th frequency-domain unit and/or a g-th time-domain unit in time-frequency resources occupied by the third signal is similar to the aforementioned content, and will not be elaborated here.

In some embodiments, the second frequency component is determined based on a product of the second signal amplitude and a fourth product. The fourth product is determined based on a numerical value e and a second sum. The second sum is a sum of a fifth product and a sixth product. The fifth product is a product of a reciprocal of the second Fourier transform point count, time, a numerical value j, a numerical value Π, 2, and a sum of k and the first frequency interval. The sixth product is a product of the numerical value j and the second signal phase.

In some embodiments, taking as an example that the signal on the second frequency component corresponds to a k-th frequency-domain unit and an i-th time-domain unit in time-frequency resources occupied by the third signal, when transmitting the first signal, the signal *x*2*_{k,i}* on the second frequency component may be expressed as formula (3). $x {2}_{k , i} = {α}_{k , i} ∗ e \left(j\frac{2 π}{{N}_{fft}}∗\left(k+Δ k\right)∗t+j∗{θ}_{k , i}\right)$

Where *α_{k,i}* is the second signal amplitude, *θ*_{*k*,*i*} is the second signal phase, and *N_{fft}* is the second Fourier transform point count. *t* is the time at which the first device transmits the first signal, and for ease of calculation, it can be assumed that *t=0*. *Δk* is the first frequency interval, illustratively, *Δk* is the number of subcarriers between the k-th frequency-domain unit of the third signal and the k-th frequency-domain unit of the second signal.

In some embodiments, taking as an example that the signal on the second frequency component corresponds to a k-th frequency-domain unit and an i-th time-domain unit in time-frequency resources occupied by the third signal, when receiving the first signal, the signal *y*2*_{k,i}* on the second frequency component may be expressed as formula (4). $y {2}_{k , i} = h {2}_{k , i} ∗ {α}_{k , i} ∗ e \left(j\frac{2 π}{{N}_{fft}}∗\left(k+Δ k\right)∗T+j∗{θ}_{k , i}\right)$

Where *α_{k,i}* is the second signal amplitude, *θ*_{*k*,*i*} is the second signal phase, and *N_{fft}* is the second Fourier transform point count. Assuming the time is T, where T represents the time at which the second device receives the first signal. *h*2*_{k,i}* is the channel coefficient corresponding to the channel carrying the third signal. Δ*k* is the first frequency interval, illustratively, *Δk* is the number of subcarriers between the k-th frequency-domain unit of the third signal and the k-th frequency-domain unit of the second signal.

In some embodiments, the phase difference of the at least two signals is determined based on a conjugate multiplication result corresponding to signals on one set of frequency components, i.e., the phase difference of the at least two signals is determined based on a conjugate multiplication result of a signal on the first frequency component and a signal on the second frequency component.

The conjugate multiplication result of the signal on the first frequency component and the signal on the second frequency component is obtained by conjugate multiplication based on formula (2) and formula (4), and the conjugate multiplication result can be expressed as formula (5). $\begin{matrix}y {2}_{k , i} ∗ conj \left(y{1}_{k , i}\right) \\ = h {2}_{k , i} ∗ {α}_{k , i} ∗ e \left(j\frac{2 π}{{N}_{fft}}∗\left(k+Δ k\right)∗T+j∗{θ}_{k , i}\right) ∗ conj \left(h{1}_{k , i}∗{α}_{k , i}∗e\left(j\frac{2 π}{{N}_{fft}}∗k∗T+j∗{θ}_{k , i}\right)\right) \\ = h {2}_{k , i} ∗ {\left|{α}_{k , i}\right|}^{2} ∗ conj \left(h{1}_{k , 1}\right) ∗ e \left(j\frac{2 π}{{N}_{fft}}∗Δ k∗T\right)\end{matrix}$

If the channel carrying the second signal is similar to the channel carrying the third signal, then assuming *h*1*_{k,i}* ≈ *h*2*_{k,i}*, the conjugate multiplication result can be expressed as formula (6). $y {2}_{k , i} ∗ conj \left(y{1}_{k , i}\right) = {\left|{α}_{k , i}\right|}^{2} ∗ {\left|h{2}_{k , i}\right|}^{2} ∗ e \left(j\frac{2 π}{{N}_{fft}}∗Δ k∗T\right) = {\left|{α}_{k , i}\right|}^{2} ∗ {\left|h{2}_{k , i}\right|}^{2} ∗ e \left(j\frac{2 π}{{N}_{fft}}∗Δ k∗d/{v}_{c}\right)$
*d* can be calculated through the phase difference $\frac{2 π}{{N}_{fft}} ∗ Δ k ∗ d / {v}_{c}$.

In some embodiments, the phase difference of the at least two signals is determined based on conjugate multiplication results corresponding to signals on multiple sets of frequency components. Then, for the second signal and the third signal, the above calculation principle may be applied to signals on multiple sets of frequency components to compute multiple phase differences. After performing mathematical processing on the multiple phase differences $\frac{2 π}{{N}_{fft}} ∗ Δ k ∗ d / {v}_{c}$ , a first statistical value is obtained, and *d* can be calculated based on this first statistical value. Illustratively, the first statistical value is an average value, maximum value, minimum value, or median value.

Optionally, the multiple sets of frequency components may correspond to some frequency-domain units and/or some time-domain units in the second signal. That is, some frequency-domain units and/or some time-domain units are selected from the second signal to calculate the distance *d*.

Optionally, the multiple sets of frequency components may correspond to some frequency-domain units and/or some time-domain units in the third signal. That is, some frequency-domain units and/or some time-domain units are selected from the third signal to calculate the distance *d*.

Optionally, the multiple sets of frequency components may correspond to all frequency-domain units and/or all time-domain units in the second signal. That is, all frequency-domain units and/or all time-domain units in the second signal are traversed to calculate the distance *d*.

Optionally, the multiple sets of frequency components may correspond to all frequency-domain units and/or all time-domain units in the third signal. That is, all frequency-domain units and/or all time-domain units in the third signal are traversed to calculate the distance *d*.

Illustratively, as illustrated in FIG. 15, the second signal occupies 4 frequency-domain units and 7 time-domain units in total, and the third signal occupies 4 frequency-domain units and 7 time-domain units in total. The second signal and the third signal can be divided into signals on 28 sets of frequency components in total. Illustratively, the first set of frequency components corresponds to the first frequency-domain unit and the first time-domain unit in the second signal as well as the first frequency-domain unit and the first time-domain unit in the third signal. The second set of frequency components corresponds to the first frequency-domain unit and the second time-domain unit in the second signal as well as the first frequency-domain unit and the second time-domain unit in the third signal ... The 28th set of frequency components corresponds to the fourth frequency-domain unit and the seventh time-domain unit in the second signal as well as and the fourth frequency-domain unit and the seventh time-domain unit in the third signal.

Then, the frequency components used to calculate the distance *d* may be multiple sets of frequency components selected from these 28 sets according to a certain rule or randomly. Alternatively, the frequency components used to calculate the distance d may be all of these 28 sets of frequency components.

It can be understood that the greater the number of sets of frequency components used to calculate the distance *d*, the higher the accuracy of the phase difference obtained through the first statistical value, and the more accurate the calculation result of the distance *d*. However, considering issues such as computational complexity, resource consumption, and power consumption, the number of sets of frequency components used to calculate the distance *d* may be appropriately reduced or limited to lower the computational complexity and load of the second device, thereby saving power and resources. The embodiments illustrated in the disclosure do not limit the number of sets of frequency components used to calculate the distance *d*; this number may be adjusted according to actual situations.

In some embodiments, considering possible offsets in the time domain and frequency domain during signal transmission, compensation in the time domain and frequency domain may be performed on the first signal before obtaining the conjugate multiplication result corresponding to signals on one set of frequency components. After determining the actual time-frequency position of the first signal, the phase difference of the at least two signals is then obtained based on the conjugate multiplication result corresponding to signals on one set of frequency components.

Other related content in step 830 may refer to step 710, and details are not repeated here.

In summary, the method provided in the embodiments of the disclosure offers a feasible solution for achieving positioning and/or ranging through phase difference. The obtained positioning result and/or ranging result exhibits high accuracy and is simple to implement. Even when the capability of the first device is relatively weak, such as when the first device is a zero-power device-which may have issues like narrow supported bandwidth, poor stability, and low accuracy-the method provided in the embodiments of the disclosure can still achieve high-precision positioning and/or ranging. Moreover, it supports the transmission of the first signal being triggered by the first signaling and/or the transmission parameters of the first signal being configured, making the transmission of the first signal better aligned with the overall requirements within the communication system.

Since the design of the first signal is relatively simple, it can save transmission resources required for positioning and/or ranging. Especially when the first device is a zero-power device, the overall power consumption required for positioning and/or ranging is significantly reduced due to the low or even zero power consumption of such devices, thereby improving the overall efficiency within the communication system.

Furthermore, the method provided in the embodiments of the disclosure offers high flexibility. It supports both positioning and/or ranging of the first device through the method provided in the embodiments of the disclosure, as well as positioning and/or ranging of the second device through the method provided in the embodiments of the disclosure.

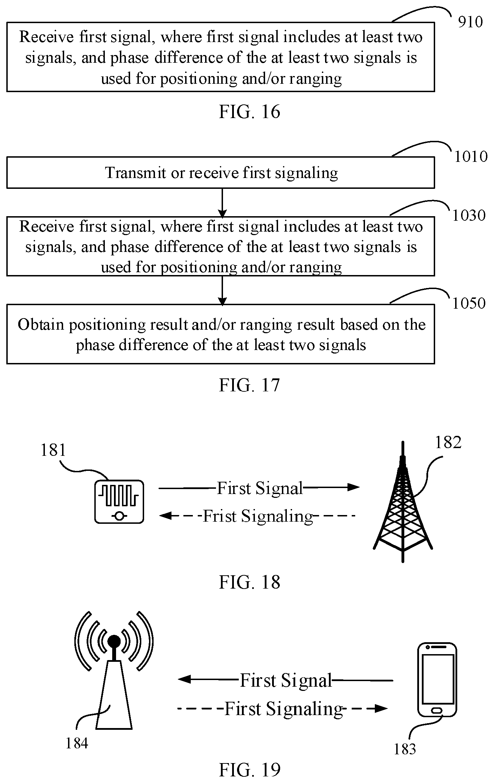

FIG. 16 illustrates a schematic flowchart of a signal transmission method provided in an exemplary embodiment of the disclosure. The method is performed by a second device and includes the following.

Step 910: Receive a first signal, where the first signal includes at least two signals, and a phase difference of the at least two signals is used for positioning and/or ranging.

In some embodiments, the second device is implemented as the network device 110 illustrated in FIG. 1, or as the terminal device 130 illustrated in FIG. 1, or as the network device 110 illustrated in FIG. 2.

In some embodiments, the first signal is referred to as a positioning reference signal, a positioning assistance signal, or a reference signal.

In some embodiments, the sender of the first signal is a first device, and the receiver of the second signal is the second device.

It should be noted that in the embodiments of the disclosure, the "at least two signals" may be relative to the sender of the first signal (i.e., the first device) or relative to the receiver of the first signal (e.g., the second device).

In some embodiments, the "at least two signals" are relative to the first device. When the first device transmits the first signal, the first signal includes at least two signals. This can also be understood as the first signal including at least two sub-signals, or the first signal including at least two signal segments, or the first signal including at least two signal portions. Therefore, the phase difference of the at least two signals can also be understood as the phase difference of at least two sub-signals, the phase difference of at least two signal segments, or the phase difference of at least two signal portions.

In some embodiments, the "at least two signals" are relative to the first device. The first signal is a collective term for the at least two signals, which are related but independent signals. The first device transmits the first signal, i.e., the first device transmits at least two related signals.

In some embodiments, the relationship of the at least two signals is reflected in one or more of the following aspects: the at least two signals correspond to the same positioning result; the at least two signals correspond to the same ranging result; the at least two signals correspond to the same positioning task; the at least two signals correspond to the same ranging task; the at least two signals are repeated signals; the at least two signals occupy the same time-domain resources; the at least two signals all belong to the first signal.

In some embodiments, the "at least two signals" are relative to the second device. When the first device transmits the first signal, the first signal does not include at least two signals; the second device divides the first signal into at least two signals. Therefore, the phase difference of the at least two signals can also be understood as the phase difference of at least two signals obtained by the second device dividing the first signal, or the phase difference of at least two signal segments obtained by the second device dividing the first signal, or the phase difference of at least two signal portions obtained by the second device dividing the first signal.

It should be noted that in the embodiments of the disclosure, positioning/ranging may be relative to the sender of the first signal (i.e., the first device) or relative to the receiver of the first signal (e.g., the second device).

In some embodiments, the second device obtains the phase difference of the at least two signals, acquires a positioning result of the first device based on the phase difference, and/or acquires a distance between the first device and the second device based on the phase difference.

In some embodiments, the second device obtains the phase difference of the at least two signals, acquires its own positioning result based on the phase difference, and/or acquires a distance between the second device and the first device based on the phase difference.

In summary, the method provided in the embodiments of the disclosure supports positioning and/or ranging through phase difference, offering high positioning accuracy and/or measurement accuracy with simple implementation. Due to the simplicity of the calculation principle for phase difference, the solution for achieving positioning and/or ranging through phase difference is highly robust and minimally affected by signal transmission quality or signal structure. Even when the capability of the first device is relatively weak, such as when the first device is a zero-power device-which may have issues like narrow supported bandwidth, poor stability, and low accuracy-the method provided in the embodiments of the disclosure can still achieve high-precision positioning and/or ranging.

Since the design of the first signal is relatively simple, it can save transmission resources required for positioning and/or ranging. Especially when the first device is a zero-power device, the overall power consumption required for positioning and/or ranging is significantly reduced due to the low or even zero power consumption of such devices, thereby improving the overall efficiency within the communication system.

In some embodiments, step 910 may be implemented as step 1030. Optionally, in addition to step 1030, the signal transmission method may further include step 1010 and/or step 1050, as illustrated in FIG. 17.

FIG. 17 illustrates a schematic flowchart of a signal transmission method provided in an exemplary embodiment of the disclosure. The method is performed by a second device and includes the following.

Step 1010: Transmit or receive first signaling.

In some embodiments, the second device transmits the first signaling, where the first signaling is used to trigger a first device to transmit a first signal and/or to configure transmission parameters of the first signal.

In some embodiments, the second device separately transmits first signaling for configuring transmission parameters of the first signal and for triggering the first device to transmit the first signal.

Illustratively, RRC signaling or a MAC CE transmitted by the second device is used to configure all transmission parameters of the first signal, and DCI sent is used to trigger the first device to transmit the first signal.

Illustratively, RRC signaling or a MAC CE transmitted by the second device is used to configure a first portion of transmission parameters of the first signal, and DCI sent is used to trigger the first device to transmit the first signal and to configure a second portion of transmission parameters of the first signal.

Illustratively, RRC signaling transmitted by the second device is used to configure a first portion of transmission parameters of the first signal, a MAC CE transmitted by the second device is used to configure a second portion of transmission parameters of the first signal, and DCI transmitted by the second device is used to trigger the first device to transmit the first signal.

In some embodiments, the second device receives the first signaling, where the first signaling is transmitted by a network device and is used to configure transmission parameters of the first signal.

In some embodiments, the second device receives and/or measures the first signal based on the received first signaling.

Other related content may refer to step 810, and details are not repeated here.

Step 1030: Receive a first signal, where the first signal includes at least two signals, and a phase difference of the at least two signals is used for positioning and/or ranging.

In some embodiments, referring to step 910 and step 830, the "at least two signals" mentioned in step 1030 may also be understood as "at least two sub-signals," "at least two signal portions," or "at least two signal segments." Similarly, the "phase difference of the at least two signals" mentioned in step 1030 may also be understood as a "phase difference of at least two sub-signals," a "phase difference of at least two signal portions," or a "phase difference of at least two signal segments."

In some embodiments, the phase difference of the at least two signals is determined based on signals on at least one set of frequency components. One set of frequency components includes a first frequency component and a second frequency component.

In some embodiments, the phase difference of the at least two signals is determined based on a conjugate multiplication result corresponding to signals on one set of frequency components.

In some embodiments, the phase difference of the at least two signals is determined based on a first statistical value, where the first statistical value is an average, median, minimum, or maximum of conjugate multiplication results corresponding to signals on multiple sets of frequency components. Herein, the multiple sets of frequency components are multiple sets among the at least one set of frequency components.

In some embodiments, the conjugate multiplication result corresponding to signals on one set of frequency components includes a conjugate multiplication result of a signal on the first frequency component and a signal on the second frequency component.

Other related content may refer to step 830 and step 910, and details are not repeated here.

Step 1050: Obtain a positioning result and/or a ranging result based on the phase difference of the at least two signals.

Referring to the previous formulas (1) to (6), the distance *d* can be calculated from the phase difference $\frac{2 π}{{N}_{fft}} ∗ Δ k ∗ d / {v}_{c}$. The distance *d* belongs to the positioning result and/or ranging result, or it can be understood that the positioning result and/or ranging result refers to the distance *d*.

In some embodiments, considering possible offsets in the time domain and frequency domain during signal transmission, compensation in the time domain and frequency domain may be performed on the first signal before obtaining the conjugate multiplication result corresponding to signals on one set of frequency components. After determining the actual time-frequency position of the first signal, the phase difference of the at least two signals is then obtained based on the conjugate multiplication result corresponding to signals on one set of frequency components.

Illustratively, the second device performs correlation detection using a locally generated fourth signal and the received first signal to obtain a correlation detection result. Based on the correlation detection result, the first signal is compensated in the time domain and/or frequency domain to locate the actual time-frequency position of the first signal.

Illustratively, the second device performs envelope detection using a locally generated fourth signal and the received first signal to obtain an envelope detection result. Based on the envelope detection result, the first signal is compensated in the time domain to locate the actual time-domain position of the first signal.

Based on the actual time-frequency position of the first signal, the aforementioned processing for obtaining the phase difference and distance is performed to avoid potential issues caused by time-frequency offsets.

Other related content may refer to step 830, and details are not repeated here.

It should be noted that step 1010 is an optional step, and step 1050 is an optional step.

Each of the above steps may be implemented separately. For example, step 1010 may be implemented separately as a signaling transmission method; step 1030 may be implemented separately as a signal transmission method; and step 1050 may be implemented separately as a positioning method or a ranging method.

The above steps may be freely combined. For example, step 1010 and step 1030 may be combined to implement a signal transmission method; or step 1030 and step 1050 may be combined to implement a positioning method or a ranging method; or step 1010, step 1030, and step 1050 may be combined to implement a positioning method or a ranging method.

The execution order of the above steps may be adjusted according to actual situations.

In summary, the method provided in the embodiments of the disclosure offers a feasible solution for achieving positioning and/or ranging through phase difference. The obtained positioning result and/or ranging result exhibits high accuracy and is simple to implement. Even when the capability of the first device is relatively weak, such as when the first device is a zero-power device-which may have issues like narrow supported bandwidth, poor stability, and low accuracy-the method provided in the embodiments of the disclosure can still achieve high-precision positioning and/or ranging. Moreover, it supports the transmission of the first signal being triggered by the first signaling and/or the transmission parameters of the first signal being configured, making the transmission of the first signal better aligned with the overall requirements within the communication system.

Since the design of the first signal is relatively simple, it can save transmission resources required for positioning and/or ranging. Especially when the first device is a zero-power device, the overall power consumption required for positioning and/or ranging is significantly reduced due to the low or even zero power consumption of such devices, thereby improving the overall efficiency within the communication system.

Furthermore, the method provided in the embodiments of the disclosure offers high flexibility. It supports both positioning and/or ranging of the first device through the method provided in the embodiments of the disclosure, as well as positioning and/or ranging of the second device through the method provided in the embodiments of the disclosure.

FIG. 18 illustrates a schematic diagram of a signal transmission method provided in an exemplary embodiment of the disclosure, where the method is performed by a first device and a second device. Illustratively, the first device is a zero-power device 181, and the second device is a network device 182.

The zero-power device 181 transmits a first signal to the network device 182, where the first signal includes at least two signals. The network device 182 measures the at least two signals, obtains a phase difference of the at least two signals, and, based on the phase difference, achieves one or more of the following: positioning of the zero-power device 181, positioning of the network device 182, or obtaining a distance between the network device 182 and the zero-power device 181.

Optionally, before the zero-power device 181 transmits the first signal to the network device 182, the network device 182 transmits first signaling to the zero-power device 181. Optionally, the first signaling is used to configure transmission parameters of the first signal and to trigger transmission of the first signal. For details, refer to the aforementioned step 830 and step 1030, which are not elaborated here.

FIG. 19 illustrates a schematic diagram of a signal transmission method provided in an exemplary embodiment of the disclosure, where the method is performed by a first device and a second device. Illustratively, the first device is an STA 183, and the second device is an AP 184.

The STA 183 transmits a first signal to the AP 184, where the first signal includes at least two signals. The AP 184 measures the at least two signals, obtains a phase difference of the at least two signals, and, based on the phase difference, achieves one or more of the following: positioning of the STA 183, positioning of the AP 184, or obtaining a distance between the AP 184 and the STA 183.

Optionally, before the STA 183 transmits the first signal to the AP 184, the AP 184 transmits first signaling to the STA 183. Optionally, the first signaling is used to configure transmission parameters of the first signal and to trigger transmission of the first signal. For details, refer to the aforementioned step 830 and step 1030, which are not elaborated here.

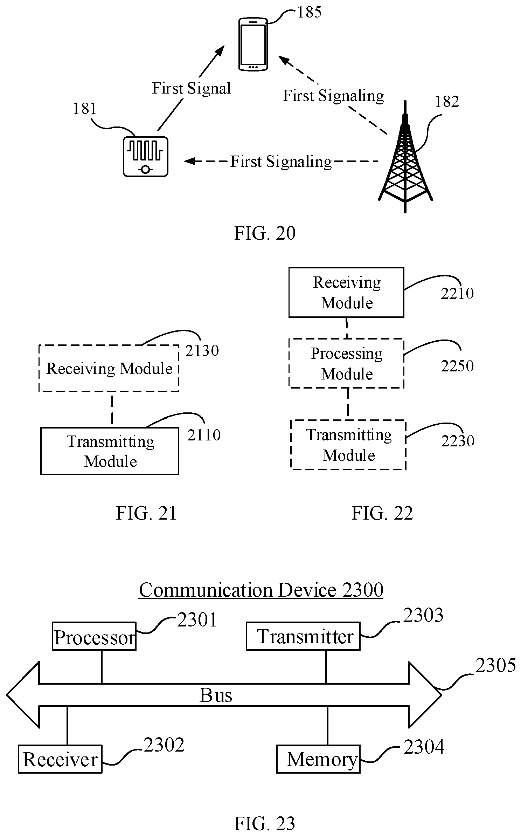

FIG. 20 illustrates a schematic diagram of a signal transmission method provided in an exemplary embodiment of the disclosure, where the method is performed by a first device, a second device, and a network device. Illustratively, the first device is a zero-power device 181, the second device is a terminal device 185, and the third device is a network device 182.

The zero-power device 181 transmits a first signal to the terminal device 185, where the first signal includes at least two signals. The terminal device 185 measures the at least two signals, obtains a phase difference of the at least two signals, and, based on the phase difference, achieves one or more of the following: positioning of the zero-power device 181, positioning of the terminal device 185, or obtaining a distance between the terminal device 185 and the zero-power device 181.

Optionally, before the zero-power device 181 transmits the first signal to the terminal device 185, the network device 182 transmits first signaling to the zero-power device 181. Optionally, the first signaling is used to configure transmission parameters of the first signal and to trigger transmission of the first signal. For details, refer to the aforementioned step 830 and step 1030, which are not elaborated here.

Optionally, the network device 182 transmits first signaling to the terminal device 185. Optionally, the first signaling is used to configure transmission parameters of the first signal to facilitate the terminal device 185 receiving and/or measuring the first signal. For details, refer to the aforementioned step 830 and step 1030, which are not elaborated here.

FIG. 21 illustrates a structural block diagram of a signal transmission apparatus provided in an exemplary embodiment of the disclosure. The apparatus may be implemented as the first device illustrated in FIG. 7, FIG. 8, FIG. 18, FIG. 19, or FIG. 20, or as part of the first device illustrated in FIG. 7, FIG. 8, FIG. 18, FIG. 19, or FIG. 20. The first device may be implemented as the network device 110 illustrated in FIG. 1, as the terminal device 120 illustrated in FIG. 1, or as the terminal device 120 belonging to a zero-power device illustrated in FIG. 2. The apparatus includes a transmitting module 2110. Optionally, the apparatus further includes a receiving module 2130.

The transmitting module 2110 is configured to transmit a first signal, where the first signal includes at least two signals, and a phase difference of the at least two signals is used for positioning and/or ranging.

In some embodiments, the at least two signals are repeated signals at different frequency positions; or, the at least two signals are different signals at different frequency positions.

In some embodiments, the at least two signals include a second signal and a third signal, where there is a frequency interval or no frequency interval between the second signal and the third signal; where the second signal is any one of the at least two signals, and the third signal is a signal adjacent to the second signal among the at least two signals.

In some embodiments, frequency intervals present among the at least two signals are equal or unequal.

In some embodiments, the frequency interval is specified by a communication protocol, configured by a network device, or determined through negotiation between the apparatus and a second device.

In some embodiments, the at least two signals are identical in at least one of the following aspects: bandwidth size; number of occupied PRBs; number of occupied subcarriers; time-domain length; time-domain start position; time-domain end position; number of occupied time-domain units.

In some embodiments, the at least two signals include a pilot signal, and/or a data signal, and/or a reference signal.

In some embodiments, the phase difference of the at least two signals is determined based on signals on at least one set of frequency components; one set of frequency components in the at least one set of frequency components includes a first frequency component and a second frequency component.

In some embodiments, the at least two signals include a second signal and a third signal; a signal on the first frequency component corresponds to a k-th frequency-domain unit in frequency-domain resources occupied by the second signal, and a signal on the second frequency component corresponds to a k-th frequency-domain unit in frequency-domain resources occupied by the third signal, where k is an integer greater than or equal to 1.

In some embodiments, the at least two signals include a second signal and a third signal; a signal on the first frequency component corresponds to a k-th frequency-domain unit and an i-th time-domain unit in time-frequency resources occupied by the second signal, and a signal on the second frequency component corresponds to a k-th frequency-domain unit and an i-th time-domain unit in time-frequency resources occupied by the third signal, where k is an integer greater than or equal to 1, and i is an integer greater than or equal to 1.

In some embodiments, the at least two signals include a second signal and a third signal; a signal on the first frequency component corresponds to a k-th frequency-domain unit and an i-th time-domain unit in time-frequency resources occupied by the second signal, and a signal on the second frequency component corresponds to a k-th frequency-domain unit and a j-th time-domain unit in time-frequency resources occupied by the third signal, where k is an integer greater than or equal to 1, i is an integer greater than or equal to 1, j is an integer greater than or equal to 1, and i and j are different.

In some embodiments, the phase difference of the at least two signals is determined based on a conjugate multiplication result corresponding to signals on the one set of frequency components; or, the phase difference of the at least two signals is determined based on a first statistical value, where the first statistical value is an average, median, minimum, or maximum of conjugate multiplication results corresponding to signals on multiple sets of frequency components, and the multiple sets of frequency components are multiple sets among the at least one set of frequency components.

In some embodiments, the conjugate multiplication result corresponding to signals on the one set of frequency components includes a conjugate multiplication result of the signal on the first frequency component and the signal on the second frequency component.

In some embodiments, the second signal includes a first signal segment, and the third signal includes a second signal segment; or, the second signal includes a first signal portion, and the third signal includes a second signal portion; or, the second signal includes a first sub-signal, and the third signal includes a second sub-signal.

In some embodiments, the apparatus further includes a receiving module 2130, configured to receive first signaling; where the first signaling is used to trigger the apparatus to transmit the first signal, and/or the first signaling is used to configure transmission parameters of the first signal.

In some embodiments, the transmission parameters of the first signal include at least one of the following: a bandwidth of the first signal; a bandwidth of the at least two signals; a frequency interval between the at least two signals; a time-domain length of the first signal; a time-domain start position of the first signal; a time-domain end position of the first signal; a number of time-domain units occupied by the first signal; a transmission period of the first signal.

In some embodiments, a channel carrying the first signaling is scrambled by a first RNTI; where the first RNTI is used to indicate that the first signaling is related to positioning and/or ranging.

In some embodiments, the first signaling includes a first information field, where a bit value of the first information field is a first value; wherein the first value is used to indicate that the first signaling is related to positioning and/or ranging.

In some embodiments, a type of the first signaling includes one of the following: DCI; RRC signaling; MAC CE.

In some embodiments, a waveform of the first signal includes one of the following: OFDM waveform; DFT-s-OFDM waveform; triangular waveform; square waveform; pulse waveform; continuous waveform.

In some embodiments, the apparatus includes at least one of the following: a zero-power device; a low-power device; an A-IoT device; a passive IoT device; an STA; a first UE.

In some embodiments, the second device includes at least one of the following: a network device; an AP; a second UE.

In some embodiments, the transmitting module 2110 is configured to perform one or more of the following steps: step 710, step 830.

In some embodiments, the receiving module 2130 is configured to perform step 810.

In summary, the apparatus provided in the embodiments of the disclosure offers a feasible solution for achieving positioning and/or ranging through phase difference. The obtained positioning result and/or ranging result exhibits high accuracy and is simple to implement. Even when the capability of the apparatus is relatively weak, such as having issues like narrow supported bandwidth, poor stability, and low accuracy, it can still achieve high-precision positioning and/or ranging. Moreover, it supports the transmission of the first signal being triggered by the first signaling and/or the transmission parameters of the first signal being configured, making the transmission of the first signal better aligned with the overall requirements within the communication system.

Since the design of the first signal is relatively simple, it can save transmission resources required for positioning and/or ranging. Especially when the apparatus is a zero-power device, the overall power consumption required for positioning and/or ranging is significantly reduced due to the low or even zero power consumption of such devices, thereby improving the overall efficiency within the communication system.

Furthermore, it supports both positioning and/or ranging of the first device through the method provided in the embodiments of the disclosure, and positioning and/or ranging of the second device through the method provided in the embodiments of the disclosure, offering high flexibility.

FIG. 22 illustrates a structural block diagram of a signal transmission apparatus provided in an exemplary embodiment of the disclosure. The apparatus may be implemented as the second device illustrated in FIG. 16, FIG. 17, FIG. 18, FIG. 19, or FIG. 20, or as part of the second device illustrated in FIG. 16, FIG. 17, FIG. 18, FIG. 19, or FIG. 20. The second device may be implemented as the network device 110 illustrated in FIG. 1, as the terminal device 130 illustrated in FIG. 1, or as the network device 110 illustrated in FIG. 2. The apparatus includes a receiving module 2210. Optionally, the apparatus further includes a transmitting module 2230 and/or a processing module 2250.

The receiving module 2210 is configured to receive a first signal, where the first signal includes at least two signals, and a phase difference of the at least two signals is used for positioning and/or ranging.

In some embodiments, the phase difference of the at least two signals is determined based on signals on at least one set of frequency components; one set of frequency components in the at least one set of frequency components includes a first frequency component and a second frequency component.

In some embodiments, the at least two signals include a second signal and a third signal; a signal on the first frequency component corresponds to a k-th frequency-domain unit in frequency-domain resources occupied by the second signal, and a signal on the second frequency component corresponds to a k-th frequency-domain unit in frequency-domain resources occupied by the third signal; wherein k is an integer greater than or equal to 1.

In some embodiments, the at least two signals include a second signal and a third signal; a signal on the first frequency component corresponds to a k-th frequency-domain unit and an i-th time-domain unit in time-frequency resources occupied by the second signal, and a signal on the second frequency component corresponds to a k-th frequency-domain unit and an i-th time-domain unit in time-frequency resources occupied by the third signal; wherein k is an integer greater than or equal to 1, and i is an integer greater than or equal to 1.

In some embodiments, the at least two signals include a second signal and a third signal; a signal on the first frequency component corresponds to a k-th frequency-domain unit and an i-th time-domain unit in time-frequency resources occupied by the second signal, and a signal on the second frequency component corresponds to a k-th frequency-domain unit and a j-th time-domain unit in time-frequency resources occupied by the third signal; wherein k is an integer greater than or equal to 1, i is an integer greater than or equal to 1, j is an integer greater than or equal to 1, and i and j are different.

In some embodiments, the phase difference of the at least two signals is determined based on a conjugate multiplication result corresponding to signals on the one set of frequency components; or, the phase difference of the at least two signals is determined based on a first statistical value, where the first statistical value is an average, median, minimum, or maximum of conjugate multiplication results corresponding to signals on multiple sets of frequency components, and the multiple sets of frequency components are multiple sets among the at least one set of frequency components.

In some embodiments, the conjugate multiplication result corresponding to signals on the one set of frequency components includes a conjugate multiplication result of the signal on the first frequency component and the signal on the second frequency component.

In some embodiments, the at least two signals are repeated signals at different frequency positions; or, the at least two signals are different signals at different frequency positions.

In some embodiments, the at least two signals include a second signal and a third signal, where there is a frequency interval or no frequency interval between the second signal and the third signal; wherein the second signal is any one of the at least two signals, and the third signal is a signal adjacent to the second signal among the at least two signals.

In some embodiments, frequency intervals present among the at least two signals are equal or unequal.

In some embodiments, the frequency interval is specified by a communication protocol, configured by a network device, or determined through negotiation between a first device and the apparatus.

In some embodiments, the at least two signals are identical in at least one of the following aspects: bandwidth size; number of occupied PRBs; number of occupied subcarriers; time-domain length; time-domain start position; time-domain end position; number of occupied time-domain units.

In some embodiments, the at least two signals include a pilot signal, and/or a data signal, and/or a reference signal.

In some embodiments, the receiving module 2210 is configured to receive first signaling; where the first signaling is used to trigger a first device to transmit the first signal, and/or the first signaling is used to configure transmission parameters of the first signal.

In some embodiments, the apparatus further includes a transmitting module 2230, configured to transmit first signaling; wherein the first signaling is used to trigger a first device to transmit the first signal, and/or the first signaling is used to configure transmission parameters of the first signal.

In some embodiments, the transmission parameters of the first signal include at least one of the following: a bandwidth of the first signal; a bandwidth of the at least two signals; a frequency interval between the at least two signals; a time-domain length of the first signal; a time-domain start position of the first signal; a time-domain end position of the first signal; a number of time-domain units occupied by the first signal; a transmission period of the first signal.

In some embodiments, a channel carrying the first signaling is scrambled by a first RNTI; where the first RNTI is used to indicate that the first signaling is related to positioning and/or ranging.

In some embodiments, the first signaling includes a first information field, where a bit value of the first information field is a first value; wherein the first value is used to indicate that the first signaling is related to positioning and/or ranging.

In some embodiments, a type of the first signaling includes one of the following: DCI; RRC signaling; MAC CE.

In some embodiments, a waveform of the first signal includes one of the following: OFDM waveform; DFT-s-OFDM waveform; triangular waveform; square waveform; pulse waveform; continuous waveform.

In some embodiments, the first device includes at least one of the following: a zero-power device; a low-power device; an A-IoT device; a passive IoT device; an STA; a first UE.

In some embodiments, the apparatus includes at least one of the following: a network device; an AP; a second UE.

In some embodiments, the apparatus further includes a processing module 2250, configured to obtain a positioning result and/or a ranging result based on the phase difference of the at least two signals.

In some embodiments, the processing module 2250 is configured to perform step 1050.

In some embodiments, the processing module 2250 is configured to determine the phase difference of the at least two signals based on signals on at least one set of frequency components.

In some embodiments, the receiving module 2210 is configured to perform one or more of the following steps: step 910, step 1030, step 1010.

In some embodiments, the transmitting module 2230 is configured to perform step 1010.

In summary, the apparatus provided in the embodiments of the disclosure offers a feasible solution for achieving positioning and/or ranging through phase difference. The obtained positioning result and/or ranging result exhibits high accuracy and is simple to implement. Even when the capability of the first device is relatively weak, such as having issues like narrow supported bandwidth, poor stability, and low accuracy, it can still achieve high-precision positioning and/or ranging. Moreover, it supports the transmission of the first signal being triggered by the first signaling and/or the transmission parameters of the first signal being configured, making the transmission of the first signal better aligned with the overall requirements within the communication system.

Since the design of the first signal is relatively simple, it can save transmission resources required for positioning and/or ranging. Especially when the first device is a zero-power device, the overall power consumption required for positioning and/or ranging is significantly reduced due to the low or even zero power consumption of such devices, thereby improving the overall efficiency within the communication system.

Furthermore, it supports both positioning and/or ranging of the first device through the method provided in the embodiments of the disclosure, and positioning and/or ranging of the second device through the method provided in the embodiments of the disclosure, offering high flexibility.

FIG. 23 illustrates a schematic structural diagram of a communication device 2300 provided in an exemplary embodiment of the disclosure, including: a processor 2301, a receiver 2302, a transmitter 2303, a memory 2304, and a bus 2305. The communication device 2300 may be used to perform at least some steps performed by the first device illustrated in FIG. 7, FIG. 8, FIG. 18, FIG. 19, or FIG. 23, or may be used to perform at least some steps performed by the second device illustrated in FIG. 16, FIG. 17, FIG. 18, FIG. 19, or FIG. 23.

The processor 2301 includes one or more processing cores. By running software programs and modules, the processor 2301 executes various functional applications and information processing. In some embodiments, the processor 2301 may be used to implement the functions and steps of the aforementioned processing module 2250.

The receiver 2302 and the transmitter 2303 may be implemented as a communication component, which may be a communication chip, and this communication component may be referred to as a transceiver. In some embodiments, the receiver 2302 may be used to implement the functions and steps of the receiving module 2130 and/or the receiving module 2210, and the transmitter 2303 may be used to implement the functions and steps of the transmitting module 2110 and/or the transmitting module 2230.

The memory 2304 is connected to the processor 2301 via the bus 2305.

The memory 2304 may be configured to store at least one instruction, and the processor 2301 is configured to execute the at least one instruction to implement the steps in the aforementioned method embodiments.

Furthermore, the memory 2304 may be implemented by any type of volatile or non-volatile storage device or a combination thereof. Volatile or non-volatile storage devices include, but are not limited to: magnetic or optical disks, electrically-erasable programmable read-only memory (EEPROM), erasable programmable read-only memory (EPROM), static random access memory (SRAM), read-only memory (ROM), magnetic memory, flash memory, and programmable read-only memory (PROM).

In some embodiments, the receiver 2302 independently performs the reception of signals/data, or the processor 2301 controls the receiver 2302 to perform the reception of signals/data, or the processor 2301 requests the receiver 2302 to perform the reception of signals/data, or the processor 2301 cooperates with the receiver 2302 to perform the reception of signals/data.

In some embodiments, the transmitter 2303 independently performs the transmission of signals/data, or the processor 2301 controls the transmitter 2303 to perform the transmission of signals/data, or the processor 2301 requests the transmitter 2303 to perform the transmission of signals/data, or the processor 2301 cooperates with the transmitter 2303 to perform the transmission of signals/data.

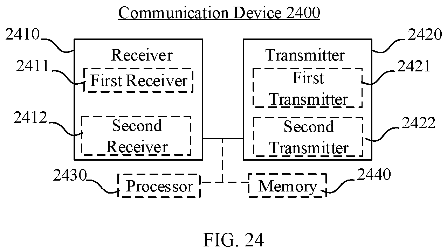

FIG. 24 illustrates a schematic structural diagram of a communication device 2400 provided in an exemplary embodiment of the disclosure, including: a receiver 2410 and a transmitter 2420. The communication device 2400 may be used to perform at least some steps performed by the first device illustrated in FIG. 7, FIG. 8, FIG. 18, FIG. 19, or FIG. 23.

The receiver 2410 and the transmitter 2420 may be implemented as a communication component, which may be a communication chip, and this communication component may be referred to as a transceiver.

In some embodiments, the receiver 2410 may be used to implement the functions and steps of the receiving module 2130. Optionally, the receiver 2410 may be implemented as a first receiver 2411 and/or a second receiver 2412.

In some embodiments, the transmitter 2420 may be used to implement the functions and steps of the transmitting module 2110. Optionally, the transmitter 2420 may be implemented as a first transmitter 2421 and/or a second transmitter 2422.

Optionally, the communication device 2400 may further include a processor 2430. The processor 2430 includes one or more processing cores. By running software programs and modules, the processor 2430 executes various functional applications and information processing.

Optionally, the communication device 2400 may further include a memory 2440. The memory 2440 may be configured to store at least one instruction, and the processor 2410 is configured to execute the at least one instruction to implement the steps in the aforementioned method embodiments. Furthermore, the memory 2440 may be implemented by any type of volatile or non-volatile storage device or a combination thereof. Volatile or non-volatile storage devices include, but are not limited to: magnetic or optical disks, EEPROM, EPROM, SRAM, ROM, magnetic memory, flash memory, and PROM.

Optionally, the communication device 2400 may further include a bus (not illustrated). Optionally, the memory 2440 is connected to the processor 2430 via the bus.

In some embodiments, the receiver 2410 independently performs the reception of signals/data, or the processor 2430 controls the receiver 2410 to perform the reception of signals/data, or the processor 2430 requests the receiver 2410 to perform the reception of signals/data, or the processor 2430 cooperates with the receiver 2410 to perform the reception of signals/data.

In some embodiments, the transmitter 2420 independently performs the transmission of signals/data, or the processor 2430 controls the transmitter 2420 to perform the transmission of signals/data, or the processor 2430 requests the transmitter 2420 to perform the transmission of signals/data, or the processor 2430 cooperates with the transmitter 2420 to perform the transmission of signals/data.

In some embodiments, the first receiver 2411 is implemented as a wake-up receiver (WUR), and/or the second receiver 2412 is implemented as a main receiver.

In some embodiments, the receiver 2410 is implemented as a combined receiver of a WUR and a main receiver.

In some embodiments, the first transmitter 2421 is implemented as a main transmitter, and/or the second transmitter 2422 is implemented as a backscatter transmitter.

In some embodiments, the transmitter 2420 is implemented as a combined transmitter of a main transmitter and a backscatter transmitter.

In some embodiments, the processor 2430 and the receiver 2410 may be implemented as one module, or the processor 2430 may be implemented as part of the receiver 2410.

In some embodiments, the processor 2430 and the transmitter 2420 may be implemented as one module, or the processor 2430 may be implemented as part of the transmitter 2420.

In some embodiments, the communication device 2400 includes one or more processors 2430, where different processors are used to perform the same or different steps among the aforementioned processing-related steps.

In an exemplary embodiment of this application, a computer-readable storage medium is provided. At least one program is stored in the computer-readable storage medium, and the at least one program is loaded and executed by a processor to implement the signal transmission method provided in the various method embodiments described above.

In an exemplary embodiment of this application, a chip is provided. The chip includes a programmable logic circuit and/or program instructions. When the chip runs on a communication device, it is used to implement the signal transmission method provided in the various method embodiments described above.

In an exemplary embodiment of this application, a computer program product is provided. When the computer program product runs on a processor of a computer device, it causes the computer device to execute the aforementioned signal transmission method.

In an exemplary embodiment of this application, a computer program is provided. The computer program includes computer instructions. When a processor of a computer device executes the computer instructions, it causes the computer device to execute the aforementioned signal transmission method.

Persons of ordinary skill in the art may understand that all or part of the steps for implementing the above embodiments may be accomplished by hardware or by instructing relevant hardware through a program. The program may be stored in a computer-readable storage medium, and the aforementioned storage medium may be a read-only memory, magnetic disk, optical disk, or the like.

The above descriptions are merely optional embodiments of this application and are not intended to limit this application. Any modifications, equivalent replacements, improvements, etc., made within the spirit and principles of this application shall be included within the scope of protection of this application.

## Claims

1. A signal transmission method, performed by a first device and comprising:
transmitting a first signal, wherein the first signal comprises at least two signals, and a phase difference of the at least two signals is used for positioning and/or ranging.

2. The method according to claim 1, wherein
the at least two signals are repeated signals at different frequency positions; or
the at least two signals are different signals at different frequency positions.

3. The method according to claim 1 or 2, wherein the at least two signals comprise a second signal and a third signal, and there is a frequency gap or no frequency gap between the second signal and the third signal;
wherein the second signal is any one of the at least two signals, and the third signal is a signal adjacent to the second signal among the at least two signals.

4. The method according to claim 2 or 3, wherein respective frequency gaps present among the at least two signals are equal or unequal.

5. The method according to claim 3 or 4, wherein the frequency gap is agreed upon by a communication protocol, configured by a network device, or determined through negotiation the first device and a second device.

6. The method according to any one of claims 1 to 5, wherein the at least two signals are identical in at least one of the following aspects: bandwidth size; number of occupied Physical resource blocks (PRBs); number of occupied subcarriers; time-domain length; time-domain start position; time-domain end position; number of occupied time-domain units.

7. The method according to any one of claims 1 to 6, wherein the at least two signals comprise a pilot signal, and/or a data signal, and/or a reference signal.

8. The method according to any one of claims 1 to 7, wherein the phase difference of the at least two signals is determined based on signals on at least one set of frequency components, one set of frequency components among the at least one set of frequency components comprises a first frequency component and a second frequency component.

9. The method according to claim 8, wherein the at least two signals comprise a second signal and a third signal, a signal on the first frequency component corresponds to a k-th frequency-domain unit in the frequency-domain resources occupied by the second signal, and a signal on the second frequency component corresponds to a k-th frequency-domain unit in the frequency-domain resources occupied by the third signal, wherein k is an integer greater than or equal to 1.

10. The method according to claim 8, wherein the at least two signals comprise a second signal and a third signal, a signal on the first frequency component corresponds to a k-th frequency-domain unit and an i-th time-domain unit in the time-frequency resources occupied by the second signal, and a signal on the second frequency component corresponds to a k-th frequency-domain unit and an i-th time-domain unit in the time-frequency resources occupied by the third signal, wherein k is an integer greater than or equal to 1, and i is an integer greater than or equal to 1.

11. The method according to claim 8, wherein the at least two signals comprise a second signal and a third signal, a signal on the first frequency component corresponds to a k-th frequency-domain unit and an i-th time-domain unit in the time-frequency resources occupied by the second signal, and a signal on the second frequency component corresponds to a k-th frequency-domain unit and a j-th time-domain unit in the time-frequency resources occupied by the third signal, wherein k is an integer greater than or equal to 1, i is an integer greater than or equal to 1, j is an integer greater than or equal to 1, and i and j are different.

12. The method according to any one of claims 9 to 11, wherein
the phase difference of the at least two signals is determined based on a conjugate multiplication result corresponding to the signals on the one set of frequency components; or,
the phase difference of the at least two signals is determined based on a first statistical value, the first statistical value being an average, median, minimum, or maximum of conjugate multiplication results corresponding to signals on a plurality of sets of frequency components, and the plurality of sets of frequency components is a plurality of sets of frequency components among the at least one set of frequency components.

13. The method according to claim 12, wherein the conjugate multiplication result corresponding to the signals on the one set of frequency components comprises a conjugate multiplication result of the signal on the first frequency component and the signal on the second frequency component.

14. The method according to claim 3, 9, 10, or 11, wherein
the second signal comprises a first signal segment, and the third signal comprises a second signal segment; or
the second signal comprises a first signal portion, and the third signal comprises a second signal portion; or
the second signal comprises a first sub-signal, and the third signal comprises a second sub-signal.

15. The method according to any one of claims 1 to 14, wherein the method further comprises:
receiving first signaling;
wherein the first signaling is used to trigger the first device to transmit the first signal, and/or the first signaling is used to configure transmission parameters of the first signal.

16. The method according to claim 15, wherein the transmission parameters of the first signal comprise at least one of the following: a bandwidth of the first signal; a bandwidth of the at least two signals; a frequency gap between the at least two signals; a time-domain length of the first signal; a time-domain start position of the first signal; a time-domain end position of the first signal; a number of time-domain units occupied by the first signal; a transmission period of the first signal.

17. The method according to claim 15 or 16, wherein a channel carrying the first signaling is scrambled by a first radio network temporary identifier (RNTI);
wherein the first RNTI is used to indicate that the first signaling is related to positioning and/or ranging.

18. The method according to claim 15, 16, or 17, wherein the first signaling comprises a first information field, and a bit value of the first information field is a first value;
wherein the first value is used to indicate that the first signaling is related to positioning and/or ranging.

19. The method according to any one of claims 15 to 18, wherein the type of the first signaling comprises one of the following: downlink control information (DCI); radio resource control (RRC) signaling; medium access control control element (MAC CE).

20. The method according to any one of claims 1 to 19, wherein the waveform of the first signal comprises one of the following: orthogonal frequency division multiplexing (OFDM) waveform; discrete Fourier transform spread orthogonal frequency division multiplexing (DFT-s-OFDM) waveform; triangular waveform; square waveform; pulse waveform; continuous waveform.

21. The method according to any one of claims 1 to 20, wherein the first device comprises at least one of the following:
a zero-power device; a low-power device; an ambient power enabled internet of things (A-IoT) device; a passive IoT device; a station (STA); a first terminal device (UE).

22. The method according to any one of claims 1 to 21, wherein the second device comprises at least one of the following:
a network device; an access point (AP); a second terminal device (UE).

23. A signal transmission method, performed by a network device and comprising:
receiving a first signal, wherein the first signal comprises at least two signals, and a phase difference of the at least two signals is used for positioning and/or ranging.

24. The method of claim 23, wherein the phase difference of the at least two signals is determined based on signals on at least one set of frequency components, one set of frequency components among the at least one set of frequency components comprises a first frequency component and a second frequency component.

25. The method according to claim 24, wherein the at least two signals comprise a second signal and a third signal, a signal on the first frequency component corresponds to a k-th frequency-domain unit in the frequency-domain resources occupied by the second signal, and a signal on the second frequency component corresponds to a k-th frequency-domain unit in the frequency-domain resources occupied by the third signal, wherein k is an integer greater than or equal to 1.

26. The method according to claim 24, wherein the at least two signals comprise a second signal and a third signal, a signal on the first frequency component corresponds to a k-th frequency-domain unit and an i-th time-domain unit in the time-frequency resources occupied by the second signal, and a signal on the second frequency component corresponds to a k-th frequency-domain unit and an i-th time-domain unit in the time-frequency resources occupied by the third signal, wherein k is an integer greater than or equal to 1, and i is an integer greater than or equal to 1.

27. The method according to claim 24, wherein the at least two signals comprise a second signal and a third signal, a signal on the first frequency component corresponds to a k-th frequency-domain unit and an i-th time-domain unit in the time-frequency resources occupied by the second signal, and a signal on the second frequency component corresponds to a k-th frequency-domain unit and a j-th time-domain unit in the time-frequency resources occupied by the third signal, wherein k is an integer greater than or equal to 1, i is an integer greater than or equal to 1, j is an integer greater than or equal to 1, and i and j are different.

28. The method according to any one of claims 25 to 27, wherein
the phase difference of the at least two signals is determined based on a conjugate multiplication result corresponding to the signals on the one set of frequency components; or, the phase difference of the at least two signals is determined based on a first statistical value, the first statistical value being an average, median, minimum, or maximum of conjugate multiplication results corresponding to signals on a plurality of sets of frequency components, and the plurality of sets of frequency components is a plurality of sets of frequency components among the at least one set of frequency components.

29. The method according to claim 28, wherein the conjugate multiplication result corresponding to the signals on the one set of frequency components comprises a conjugate multiplication result of the signal on the first frequency component and the signal on the second frequency component.

30. The method according to any one of claims 23 to 29, wherein
the at least two signals are repeated signals at different frequency positions; or
the at least two signals are different signals at different frequency positions.

31. The method according to any one of claims 23 or 30, wherein the at least two signals comprise a second signal and a third signal, and there is a frequency gap or no frequency gap between the second signal and the third signal;
wherein the second signal is any one of the at least two signals, and the third signal is a signal adjacent to the second signal among the at least two signals.

32. The method according to any one of claims 23 or 31, wherein respective frequency gaps present among the at least two signals are equal or unequal.

33. The method according to claim 31 or 32, wherein the frequency gap is agreed upon by a communication protocol, configured by a network device, or determined through negotiation a first device and a second device.

34. The method according to any one of claims 23 to 33, wherein the at least two signals are identical in at least one of the following aspects: bandwidth size; number of occupied Physical resource blocks (PRBs); number of occupied subcarriers; time-domain length; time-domain start position; time-domain end position; number of occupied time-domain units.

35. The method according to any one of claims 23 to 34, wherein the at least two signals comprise a pilot signal, and/or a data signal, and/or a reference signal.

36. The method according to claim 25, 26, 27, or 31, wherein
the second signal comprises a first signal segment, and the third signal comprises a second signal segment; or
the second signal comprises a first signal portion, and the third signal comprises a second signal portion; or
the second signal comprises a first sub-signal, and the third signal comprises a second sub-signal.

37. The method according to any one of claims 23 to 36, wherein the method further comprises:
transmitting or receiving first signaling;
wherein the first signaling is used to trigger a first device to transmit the first signal, and/or the first signaling is used to configure transmission parameters of the first signal.

38. The method according to claim 37, wherein the transmission parameters of the first signal comprise at least one of the following: a bandwidth of the first signal; a bandwidth of the at least two signals; a frequency gap between the at least two signals; a time-domain length of the first signal; a time-domain start position of the first signal; a time-domain end position of the first signal; a number of time-domain units occupied by the first signal; a transmission period of the first signal.

39. The method according to claim 37 or 38, wherein a channel carrying the first signaling is scrambled by a first radio network temporary identifier (RNTI);
wherein the first RNTI is used to indicate that the first signaling is related to positioning and/or ranging.

40. The method according to claim 37, 38, or 39, wherein the first signaling comprises a first information field, and a bit value of the first information field is a first value;
wherein the first value is used to indicate that the first signaling is related to positioning and/or ranging.

41. The method according to any one of claims 37 to 40, wherein the type of the first signaling comprises one of the following: downlink control information (DCI); radio resource control (RRC) signaling; medium access control control element (MAC CE).

42. The method according to any one of claims 23 to 41, wherein the waveform of the first signal comprises one of the following: orthogonal frequency division multiplexing (OFDM) waveform; discrete Fourier transform spread orthogonal frequency division multiplexing (DFT-s-OFDM) waveform; triangular waveform; square waveform; pulse waveform; continuous waveform.

43. The method according to any one of claims 23 to 42, wherein the first device comprises at least one of the following:
a zero-power device; a low-power device; an ambient power enabled internet of things (A-IoT) device; a passive IoT device; a station (STA); a first terminal device (UE).

44. The method according to any one of claims 23 to 43, wherein the second device comprises at least one of the following:
a network device; an access point (AP); a second terminal device (UE).

45. A signal transmission apparatus, comprising:
a transmitting module, configured to transmit a first signal, wherein the first signal comprises at least two signals, and a phase difference of the at least two signals is used for positioning and/or ranging.

46. A signal transmission apparatus, comprising:
a receiving module, configured to receive a first signal, wherein the first signal comprises at least two signals, and a phase difference of the at least two signals is used for positioning and/or ranging.

47. A communication device, comprising:
a processor;
a receiver and/or transmitter connected to the processor; and
a memory storing instructions executable by the processor;
wherein the communication device is configured to implement the signal transmission method of any one of claims 1 to 22 or any one of claims 23 to 44.

48. A communication apparatus, comprising: a receiver and/or a transmitter; wherein the communication apparatus is configured to implement the signal transmission method according to any one of claims 1 to 22.

49. A computer-readable storage medium, storing executable instructions which, when loaded and executed by a processor, cause the processor to implement the signal transmission method according to any one of claims 1 to 22 or any one of claims 23 to 44.

50. A chip, comprising a programmable logic circuit and/or a program, and being configured to implement the signal transmission method according to any one of claims 1 to 22 or any one of claims 23 to 44.

51. A computer program product, comprising computer instructions, wherein the computer instructions are stored in a computer-readable storage medium, and when a processor of a computer device reads and executes the computer instructions from the computer-readable storage medium, the computer device is caused to perform the signal transmission method according to any one of claims 1 to 22 or any one of claims 23 to 44.

52. A computer program, comprising computer instructions, and wherein when a processor of a computer device executes the computer instructions, the computer device is caused to perform the signal transmission method according to any one of claims 1 to 22 or any one of claims 23 to 44.
